(19) Europäisches Patentamt / European Patent Office / Office européen des brevets

(11) **EP 2 428 773 B1**

(12) **EUROPÄISCHE PATENTSCHRIFT**

(45) Veröffentlichungstag und Bekanntmachung des Hinweises auf die Patenterteilung:
**25.06.2014   Patentblatt 2014/26**

(51) Int Cl.:
***G01D 5/20*** *(2006.01)*

(21) Anmeldenummer: **10009514.0**

(22) Anmeldetag: **13.09.2010**

(54) **Phasenanaloger Wegsensor**

Phase analogue waypoint sensor

Capteur de trajectoire analogique à phases

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**14.03.2012   Patentblatt 2012/11**

(73) Patentinhaber: **Hochschule Mannheim, Technik, Gestaltung und Sozialwesen 68163 Mannheim (DE)**

(72) Erfinder: **Voigt, Burkhard 68163 Mannheim (DE)**

(74) Vertreter: **Müller-Boré & Partner Patentanwälte PartG mbB Friedenheimer Brücke 21 80639 München (DE)**

(56) Entgegenhaltungen:
**EP-A1- 0 716 390      WO-A1-2007/107353
WO-A2-2005/019775    US-A1- 2005 030 010**

EP 2 428 773 B1

**Beschreibung**

Die vorliegende Erfindung betrifft eine Vorrichtung und ein Verfahren zur Positionsbestimmung und insbesondere zur kontaktlosen Positions-, Winkel- und/oder Bewegungsmessung.

Derzeit übliche Positions- oder Wegsensoren arbeiten beispielsweise mit Bändern, in die kleine Dauermagnete implementiert sind. Die Position dieser kleinen Magnete wird über magnetfeldabhängige Widerstände erfasst. Die aktuelle Position bzw. Lage zwischen den Magneten und den magnetfeldabhängigen Widerständen wird ausgezählt, d.h. die Anzahl der Magnete, die von den Widerständen passiert wurde, wird detektiert und damit die Position der Widerstände relativ zu den Magneten ermittelt. Zur Verbesserung der räumlichen Auflösung wird oft eine analoge Interpolation von Zwischenpositionen vorgenommen. Für eine sichere Funktion müssen die magnetfeldabhängigen Widerstände nah am Magnetband positioniert sein.

Dokument US2005/003001 0 A1, beschreibt eine Vorrichtung zur Positionsbestimmung mit einem Sendemodul welches ein Gebersignal auf eine Geberspule mit mehreren Wicklungen sendet und wobei dadurch in einer elektromagnetisch gekoppelten Sensorspule ein periodisches elektrisches Signal generiert wird.

Ein weiterer möglicher Ansatz ist beispielsweise aus WO 2007/107353 A1 bekannt. Darin wird ein periodisches Signal durch ein Verzögerungsnetzwerk geschickt, welches eine Vielzahl von Verzögerungsgliedern aufweist. Jedes Verzögerungsglied verzögert das Signal um eine bekannte Phase und gibt ein entsprechendes Ausgabesignal aus, welches mittels eines relativ zum Verzögerungsnetzwerk beweglichen Sensorelements erfasst werden kann. Aus der Phase des erfassten Signals kann damit die Position des Sensorelements relativ zum Verzögerungsnetzwerk relativ genau und zuverlässig ermittelt werden. Je nach Ausführungsform weisen einzelnen Verzögerungsglieder induktive und/oder kapazitive Schaltungskomponenten auf, um die erforderliche Phasenverschiebung zu erreichen.

Aufgabe der vorliegenden Erfindung ist es, eine vereinfachte Vorrichtung und ein entsprechendes Verfahren zur Positionsbestimmung mit einem hohen Auflösungsvermögen bereitzustellen. Diese Aufgabe wird durch eine Vorrichtung und ein Verfahren mit den im Anspruch 1 oder 5 bzw. 13 oder 14 angegebenen Merkmalen gelöst. Bevorzugte Ausführungsformen sind Gegenstand der abhängigen Ansprüche.

Somit stellt die vorliegende Erfindung in einem Aspekt insbesondere eine Vorrichtung zur Positionsbestimmung bereit, welche zumindest ein Sendemodul und eine Empfangseinrichtung (hier auch als Sensoreinrichtung bezeichnet) umfasst. Dabei weist das zumindest eine Sendemodul zumindest eine erste und eine zweite Leiterlängskomponente auf, die sich parallel zueinander entlang bzw. parallel zu einer Längserstreckung des Sendemoduls erstrecken. Je nach Ausführungsform können die Leiterlängskomponenten dabei jeweils einen oder mehrere elektrische Leiter bzw. Leiterelemente bzw. Drähte (im Folgenden auch elektrische Längsleiter genannt) umfassen. Sie können somit insbesondere jeweils zumindest abschnittsweise von einem einzelnen elektrischen Leiter oder von einem Leiterbündel bzw. Leiterstrang aus einer Vielzahl von elektrischen Leitern gebildet sein.

Die Längserstreckung des Sendemoduls bildet dabei einen Messweg, also einen Weg, entlang dessen durch die erfindungsgemäße Vorrichtung eine Position bestimmt werden kann. Je nach Anwendung und dem damit gewünschten Messweg bildet die Längserstreckung zumindest abschnittsweise eine gerade Strecke oder eine gekrümmte Kurve, wie z.B. einen Kreisbogen. Entsprechend folgen die Leiterlängskomponenten dieser geraden bzw. gekrümmten Längserstreckung. Im Falle eines gekrümmten Messweges ist der zueinander parallele Verlauf der Leiterlängskomponenten so zu verstehen, dass entsprechende Tangenten an die erste Leiterlängskomponente und die zweite Leiterlängskomponente parallel zueinander verlaufen. In einer Richtung senkrecht zur Längserstreckung (diese kann hier auch Quererstreckung genannt werden) haben die beiden Leiterlängskomponenten einen konstanten gegenseitigen Abstand. Die zumindest zwei Leiterlängskomponenten des Sendemoduls verlaufen dabei von einem ersten Endabschnitt des Sendemoduls (auch erster Endabschnitt der Leiterlängskomponenten genannt) zu einem in Bezug auf die Längserstreckung gegenüberliegenden zweiten Endabschnitt des Sendemoduls (auch zweiter Endabschnitt der Leiterlängskomponenten genannt). Die Endabschnitte des Sendemoduls legen dabei insbesondere einen Anfang bzw. ein Ende des Messweges bzw. des messbaren Weges fest.

Außerdem weist das zumindest eine Sendemodul einen ersten Signalgeber auf, welcher ausgelegt ist, am ersten Endabschnitt des Sendemoduls in der ersten und zweiten Leiterlängskomponente ein erstes periodisches Stromsignal mit einer ersten Phase bereitzustellen. Die beiden Leiterlängskomponenten bilden dabei im Bereich des ersten Endabschnitts eine Vor- bzw. Rückleitung für das erste periodische Stromsignal. Der vom ersten periodischen Stromsignal am ersten Endabschnitt des Sendemoduls bewirkte elektrische Strom in der ersten Leiterlängskomponente ist damit gegenparallel (also entgegengesetzt orientiert) und vorzugsweise dem Betrag nach gleich zu dem vom ersten periodischen Stromsignal am ersten Endabschnitt des Sendemoduls bewirkten elektrischen Strom in der zweiten Leiterlängskomponente. Damit bewirken die in den beiden Leiterlängskomponenten durch das erste periodische Stromsignal erzeugten elektrischen Ströme ein erstes periodisches Magnetfeld dessen Phasenlage der ersten Phase des ersten periodischen Stromsignals entspricht.

Außerdem weist das zumindest eine Sendemodul in vorzugsweise analoger Weise einen zweiten Signalgeber auf, welcher ausgelegt ist, am zweiten Endabschnitt des Sendemoduls in der ersten und zweiten Leiterlängskomponente ein zweites periodisches Stromsignal mit einer gegenüber der ersten Phase um eine bestimmte bzw. bestimmbare Phasenverschiebung verschobenen zweiten Phase bereitzustellen. Die beiden Leiterlängskomponenten bilden dabei im Bereich des zweiten Endabschnitts eine Vor- bzw. Rückleitung für das zweite periodische Stromsignal. Der vom zweiten periodischen Stromsignal am zweiten Endabschnitt des Sendemoduls bewirkte elektrische Strom in der ersten Leiterlängskomponente ist damit gegenparallel (also entgegengesetzt orientiert) und vorzugsweise dem Betrag nach gleich zu dem vom zweiten periodischen Stromsignal am ersten Endabschnitt des Sendemoduls bewirkten elektrischen Strom in der zweiten Leiterlängskomponente. Damit bewirken die in den beiden Leiterlängskomponenten durch das zweite periodische Stromsignal erzeugten elektrischen Ströme ein zweites periodisches Magnetfeld dessen Phasenlage der zweiten Phase des zweiten periodischen Stromsignals entspricht.

Die vom ersten und zweiten periodischen Stromsignal in den Leiterlängskomponenten bewirkten elektrischen Ströme können dabei jeweils in einem oder mehreren gemeinsamen elektrischen Längsleiter(n) oder in separaten elektrischen Längsleitern geführt werden. Beispiele und bevorzugte Ausführungsformen gemeinsamer bzw. separater elektrischer Längsleiter für das erste und zweite Stromsignal werden später noch genauer ausgeführt.

Außerdem weist das zumindest eine Sendemodul eine elektrische Querverbindung bzw. Querverbindungsstruktur auf, welche an einer Vielzahl von Positionen entlang der Längserstreckung des Sendemoduls die erste und zweite Leiterlängskomponente derart elektrisch leitend miteinander verbindet, dass der aufgrund des ersten Stromsignals in der ersten und zweiten Leiterlängskomponente fließende elektrische Strom vom ersten Endabschnitt zum zweiten Endabschnitt hin monoton abnimmt, während der aufgrund des zweiten Stromsignals in der ersten und zweiten Leiterlängskomponente fließende elektrische Strom vom zweiten Endabschnitt zum ersten Endabschnitt hin monoton abnimmt.

Jede Position entlang der Längserstreckung des Sendemoduls, an der die erste und zweite Leiterlängskomponente mittels der elektrischen Querverbindung elektrisch leitend miteinander verbunden ist, bildet dabei einen Verzweigungs- bzw. Sammelpunkt für den elektrischen Strom des ersten und/oder zweiten Stromsignals in den Leiterlängskomponenten. So wird an den entsprechenden Verzweigungspunkten jeweils ein Teil des in einer der Leiterlängskomponenten vom ersten Endabschnitt in Richtung des zweiten Endabschnittes fließenden Stroms des ersten Stromsignals wieder über die elektrische Querverbindung und die andere Leiterlängskomponente zum ersten Endabschnitt zurückgeführt, so dass der aufgrund des ersten Stromsignals in den Leiterlängskomponenten fließende elektrische Strom vom ersten Endabschnitt zum zweiten Endabschnitt hin monoton abnimmt. Dadurch nimmt auch das durch den Strom in den Leiterlängskomponenten erzeugte erste Magnetfeld, also dessen Amplitude, vom ersten Endabschnitt zum zweiten Endabschnitt hin monoton ab.

In analoger Weise wird an den entsprechenden Verzweigungspunkten jeweils ein Teil des in einer der Leiterlängskomponenten vom zweiten Endabschnitt in Richtung des ersten Endabschnittes fließenden Stroms des zweiten Stromsignals wieder über die elektrische Querverbindung und die andere Leiterlängskomponente zum zweiten Endabschnitt zurückgeführt, so dass der aufgrund des zweiten Stromsignals in den Leiterlängskomponenten fließende elektrische Strom vom zweiten Endabschnitt zum ersten Endabschnitt hin monoton abnimmt. Dadurch nimmt auch das durch den Strom in den Leiterlängskomponenten erzeugte zweite Magnetfeld, also dessen Amplitude, vom zweiten Endabschnitt zum ersten Endabschnitt hin monoton ab.

Durch die Überlagerung des ersten und zweiten periodischen Magnetfeldes ergibt sich ein periodisches Gesamtmagnetfeld, dessen Phase von den Phasenlagen des ersten und zweiten Magnetfeldes sowie von der jeweiligen Amplitude des ersten und zweiten Magnetfeldes abhängt. Damit hängt die Phase des Gesamtmagnetfeldes insbesondere von der Position entlang der Längserstreckung des Sendemoduls ab. Während in der Nähe des ersten Endabschnittes vorzugsweise das Gesamtmagnetfeld vom ersten Magnetfeld dominiert wird, und die Phase des Gesamtmagnetfeldes daher nahe der Phase des ersten Magnetfeldes liegt, nimmt der Einfluss des ersten Magnetfeldes entlang des Messweges vom ersten Endabschnitt zum zweiten Endabschnitt hin ab, wohingegen der Einfluss des zweiten Magnetfeldes entlang des Messweges vom ersten Endabschnitt zum zweiten Endabschnitt hin zunimmt. In der Nähe des zweiten Endabschnittes wird das Gesamtmagnetfeld dann vorzugsweise vom zweiten Magnetfeld dominiert, wodurch die Phase des Gesamtmagnetfeldes in diesem Bereich vorzugsweise nahe der Phase des zweiten Magnetfeldes liegt. Die Phasenlage des Gesamtmagnetfeldes ist damit ein Maß für die Position entlang des Messweges.

Außerdem umfasst die Vorrichtung gemäß diesem Aspekt der Erfindung eine Sensoreinrichtung, welche zumindest ein relativ zum Sendemodul bewegbares Sensorelement umfasst, welches ausgelegt ist, das durch den elektrischen Stromfluss in der ersten und zweiten Leiterlängskomponente erzeugtes Magnetfeld zu erfassen, wobei die Sensoreinrichtung ausgelegt ist, eine Phasenverschiebung des erfassten Magnetfeldes relativ zu einem periodischen Referenzsignal zu ermitteln, dessen Phase relativ zum ersten Stromsignal um eine Referenzphase verschoben ist. Dabei kann als Referenzsignal vorzugsweise auch direkt das erste Stromsignal verwendet werden. In diesem Fall ist die Referenzphase vorzugsweise Null.

Damit ist die erfindungsgemäße Vorrichtung ausgelegt, die Phasenlage des durch das Sensorelement erfassten zeitlich periodischen Magnetfeldes (Gesamtmagnetfeld) relativ zu den Phasenlagen der zeitlich periodischen Stromsignale der Signalgeber zu ermitteln. Das erfasste Magnetfeld ist dabei von der Position des Sensorelements relativ zu den Leiterlängskomponenten, also insbesondere der Position des Sensorelements entlang der Längserstreckung abhängig. Insbesondere hängt somit die Phasenlage des erfassten Magnetfeldes relativ zum ersten und/oder zweiten Stromsignal von der Position des Sensorelements entlang der Längserstreckung ab. Über die durch die Sensoreinrichtung ermittelte Phasenlage des im Sensorelement erfassten Magnetfeldes relativ zu einem periodischen Referenzsignal und insbesondere relativ zum ersten und/oder zweiten Stromsignal lässt sich die Position des Sensorelements relativ zum Sendemodul bestimmen.

Die beiden Leiterlängskomponenten bilden zusammen mit der elektrischen Querverbindung ein Stromnetzwerk. Beispiele und bevorzugte Ausführungsformen des Stromnetzwerkes werden später noch genauer ausgeführt. Dabei fungiert in diesem Aspekt der Erfindung das Stromnetzwerk als Sender für das zeitlich periodische Magnetfeld und das relativ zum Stromnetzwerk bewegbare Sensorelement als Empfänger für dieses Magnetfeld.

Damit ist die erfindungsgemäße Positionsbestimmung nicht auf die Detektion und Auswertung von Signalintensitäten angewiesen. Anstelle dessen basiert die Positionsbestimmung auf der Ermittlung relativer Phasenlagen von Signalen, vorzugsweise im Wesentlichen unabhängig von deren Intensität. Damit erreicht die Erfindung eine hohe Störungsunempfindlichkeit bzw. Störfestigkeit und ein hohes Auflösungsvermögen mit vergleichsweise einfachen Mitteln. Insbesondere ist das Stromnetzwerk nicht auf komplizierte kapazitive oder induktive Schaltelemente angewiesen. Vor allem wird durch die Erfindung eine hohe Messempfindlichkeit auch bei größeren Abständen zwischen Sender (z. B. Stromnetzwerk) und Empfänger (z. B. Sensorelement) erreicht.

Insbesondere wenn für die vom ersten und zweiten periodischen Stromsignal in den Leiterlängskomponenten bewirkten elektrischen Ströme separate elektrische Längsleiter vorgesehen sind, umfasst das Stromnetzwerk vorzugsweise eine erste Stromnetzwerkkomponente und eine zweite Stromnetzwerkkomponente. Dabei umfasst die erste Stromnetzwerkkomponente vorzugsweise einen oder mehrere erste elektrische Längsleiter der ersten Leiterlängskomponente und einen oder mehrere erste elektrische Längsleiter der zweiten Leiterlängskomponente. Dabei wird der vom ersten periodischen Stromsignal in der ersten und der zweiten Leitungslängskomponente bewirkte elektrische Strom in dem einem bzw. den mehreren ersten elektrischen Längsleitern der ersten bzw. zweiten Leiterlängskomponente bewirkt.

Außerdem umfasst die erste Stromnetzwerkkomponente vorzugsweise eine erste Querverbindungskomponente, welche an einer Vielzahl von Positionen entlang der Längserstreckung des Sendemoduls den einen oder die mehreren ersten elektrischen Längsleiter der ersten Leiterlängskomponente mit dem einen oder den mehreren ersten elektrischen Längsleitern der zweiten Leiterlängskomponente derart elektrisch leitend verbindet, dass der aufgrund des ersten Stromsignals in dem ersten elektrischen Längsleiter bzw. den ersten elektrischen Längsleitern der ersten und zweiten Leiterlängskomponente fließende elektrische Strom vom ersten Endabschnitt zum zweiten Endabschnitt hin monoton abnimmt.

Entsprechend umfasst die zweite Stromnetzwerkkomponente vorzugsweise einen oder mehrere zweite elektrische Längsleiter der ersten Leiterlängskomponente und einen oder mehrere zweite elektrische Längsleiter der zweiten Leiterlängskomponente. Dabei wird der vom zweiten periodischen Stromsignal in der ersten und der zweiten Leitungslängskomponente bewirkte elektrische Strom in dem einem bzw. den mehreren zweiten elektrischen Längsleitern der ersten bzw. zweiten Leiterlängskomponente bewirkt. Außerdem umfasst die zweite Stromnetzwerkkomponente vorzugsweise eine zweite Querverbindungskomponente, welche an einer Vielzahl von Positionen entlang der Längserstreckung des Sendemoduls den einen oder die mehreren zweiten elektrischen Längsleiter der ersten Leiterlängskomponente mit dem einen oder den mehreren zweiten elektrischen Längsleitern der zweiten Leiterlängskomponente derart elektrisch leitend verbindet, dass der aufgrund des zweiten Stromsignals in dem zweiten elektrischen Längsleiter bzw. den zweiten elektrischen Längsleitern der ersten und zweiten Leiterlängskomponente fließende elektrische Strom vom zweiten Endabschnitt zum ersten Endabschnitt hin monoton abnimmt.

Vorzugsweise umfasst die erste und zweite Leiterlängskomponente jeweils einen elektrischen Längsleiter, welcher sich jeweils vom ersten Endabschnitt, über welchen er mit dem ersten Signalgeber elektrisch verbunden ist, zum zweiten Endabschnitt erstreckt, über welchen er mit dem zweiten Signalgeber elektrisch verbunden ist.

Damit nutzen insbesondere die beiden periodischen Stromsignale gemeinsame elektrische Leiter, welche somit vorzugsweise ein gemeinsames Stromnetzwerk bilden. In diesem Fall umfassen die Signalgeber vorzugsweise Stromgeber, welche ausgelegt sind an entsprechenden Anschlusskontakten im ersten bzw. zweiten Endabschnitt bestimmte konstante Stromamplituden bereitzustellen.

Alternativ umfasst das Sendemodul vorzugsweise:

-  eine erste Stromnetzwerkkomponente mit

    -- einem oder mehreren ersten elektrischen Längsleitern der ersten Leiterlängskomponente;
    -- einem oder mehreren ersten elektrischen Längsleitern der zweiten Leiterlängskomponente; und
    -- einer ersten Querverbindungskomponente, welche an einer Vielzahl von Positionen entlang der Längserstreckung des Sendemoduls den einen oder die mehreren ersten elektrischen Längsleiter der ersten Leiterlängskomponente mit dem einen oder den mehreren ersten elektrischen Längsleitern der zweiten Leiterlängskomponente derart elektrisch leitend verbindet, dass der aufgrund des ersten Stromsignals in dem ersten elektrischen Längsleiter bzw. den ersten elektrischen Längsleitern der ersten und zweiten Leiterlängskomponente fließende elektrische Strom vom ersten Endabschnitt zum zweiten Endabschnitt hin monoton abnimmt; und

- eine zweite Stromnetzwerkkomponente mit

-- einem oder mehreren zweiten elektrischen Längsleitern der ersten Leiterlängskomponente;
-- einem oder mehreren zweiten elektrischen Längsleitern der zweiten Leiterlängskomponente; und
-- einer zweiten Querverbindungskomponente, welche an einer Vielzahl von Positionen entlang der Längserstreckung des Sendemoduls den einen oder die mehreren zweiten elektrischen Längsleiter der ersten Leiterlängskomponente mit dem einen oder den mehreren zweiten elektrischen Längsleitern der zweiten Leiterlängskomponente derart elektrisch leitend verbindet, dass der aufgrund des ersten Stromsignals in dem zweiten elektrischen Längsleiter bzw. den zweiten elektrischen Längsleitern der ersten und zweiten Leiterlängskomponente fließende elektrische Strom vom zweiten Endabschnitt zum ersten Endabschnitt hin monoton abnimmt.

Damit nutzen in diesem Fall die beiden periodischen Stromsignale separate elektrische Leiter, welche somit vorzugsweise separate Stromnetzwerkkomponenten bilden. In diesem Fall umfassen die Signalgeber vorzugsweise Stromgeber oder Spannungsgeber, welche ausgelegt sind an entsprechenden Anschlusskontakten im ersten bzw. zweiten Endabschnitt bestimmte konstante Strom- bzw. Spannungsamplituden bereitzustellen.

Vorzugsweise umfasst die erste Stromnetzwerkkomponente in diesem Fall eine erste Leiterspule mit einer Vielzahl von ersten Leiterwindungen, welche jeweils von einem ersten elektrischen Längsleiter der ersten Leiterlängskomponente, einem ersten elektrischen Längsleiter der zweiten Leiterlängskomponente, einem die erste und zweite Leiterlängskomponente am ersten Endabschnitt verbindenden Verbindungsleiter und einem von der ersten Querverbindungskomponente umfassten ersten Querleiter gebildet werden, wobei die von der ersten Querverbindungskomponente umfassten ersten Querleiter der Vielzahl erster Leiterwindungen zumindest teilweise an unterschiedlichen Positionen entlang der Längserstreckung angeordnet sind.

Außerdem umfasst die zweite Stromnetzwerkkomponente vorzugweise eine zweite Leiterspule mit einer Vielzahl von zweiten Leiterwindungen, welche jeweils von einem zweiten elektrischen Längsleiter der ersten Leiterlängskomponente, einem zweiten elektrischen Längsleiter der zweiten Leiterlängskomponente, einem die erste und zweite Leiterlängskomponente am zweiten Endabschnitt verbindenden Verbindungsleiter und einem von der zweiten Querverbindungskomponente umfassten zweiten Querleiter gebildet werden, wobei die von der zweiten Querverbindungskomponente umfassten zweiten Querleiter der Vielzahl zweiter Leiterwindungen zumindest teilweise an unterschiedlichen Positionen entlang der Längserstreckung angeordnet sind.

In einem weiteren Aspekt bietet die Erfindung eine Vorrichtung zur Positionsbestimmung umfassend:

- zumindest ein Sendeelement, welches ausgelegt ist, ein periodisches Magnetfeld zu erzeugen,
- zumindest ein relativ zum Sendeelement bewegbares Stromnetzwerk mit zumindest einer ersten und einer zweiten Leiterlängskomponente, die sich entlang einer Längserstreckung des Stromnetzwerks parallel zueinander von einem ersten Endabschnitt des Stromnetzwerks zu einem zweiten Endabschnitt des Stromnetzwerks erstrecken, wobei das Stromnetzwerk umfasst:

-- eine erste Stromnetzwerkkomponente, welche eine erste Leiterspule mit einer Vielzahl von ersten Leiterwindungen umfasst, welche jeweils von einem ersten elektrischen Längsleiter der ersten Leiterlängskomponente, einem ersten elektrischen Längsleiter der zweiten Leiterlängskomponente, einem die erste und zweite Leiterlängskomponente am ersten Endabschnitt verbindenden Verbindungsleiter und einem zwischen dem ersten Endabschnitt und dem zweiten Endabschnitt angeordneten ersten Querleiter gebildet werden, wobei die ersten Querleiter der Vielzahl erster Leiterwindungen zumindest teilweise an unterschiedlichen Positionen entlang der Längserstreckung angeordnet sind und insbesondere senkrecht zur Längserstreckung verlaufen, und
-- eine zweite Stromnetzwerkkomponente, welche eine zweite Leiterspule mit einer Vielzahl von zweiten Leiterwindungen umfasst, welche jeweils von einem zweiten elektrischen Längsleiter der ersten Leiterlängskomponente, einem zweiten elektrischen Längsleiter der zweiten Leiterlängskomponente, einem die erste und zweite Leiterlängskomponente am zweiten Endabschnitt verbindenden Verbindungsleiter und einem zwischen dem ersten Endabschnitt und dem zweiten Endabschnitt angeordneten zweiten Querleiter gebildet werden, wobei die zweiten Querleiter der Vielzahl zweiter Leiterwindungen zumindest teilweise an unterschiedlichen Positionen entlang der Längserstreckung angeordnet sind und insbesondere senkrecht zur Längserstreckung verlaufen; und

- eine Sensoreinrichtung, welche ausgelegt ist, ein in der ersten Leiterspule durch das periodische Magnetfeld induziertes erstes elektrisches Signal, insbesondere eine erste Spannung, und ein in der zweiten Leiterspule durch das periodische Magnetfeld induziertes zweites elektrisches Signal, insbesondere eine zweite Spannung, zu erfassen.

Die in den jeweiligen Leiterspulen induzierten Spannungen hängen von der Anzahl der vom Magnetfeld wirksam durchdrungenen Leiterwindungen ab. Diese wieder hängen von der Position des Stromnetzwerks relativ zum Sendeelement ab, weshalb aus den erfassten Signalen die Position des Sendelements relativ zum Stromnetzwerk bestimmt werden kann. Beispielsweise kann dies durch einen Vergleich der Amplituden der beiden induzierten Signale erfolgen. Dazu ist die Sensoreinrichtung vorzugsweise ausgelegt, einen Quotient und/oder eine Differenz der beiden erfassten Signal auszuwerten.

Vorzugsweise umfasst die Sensoreinrichtung einen Phasenschieber, welcher ausgelegt ist, die Phase des erfassten zweiten Signals um eine bestimmte Phasenverschiebung zu verschieben, wobei die Sensoreinrichtung ausgelegt ist, das erfasst erste Signal und das in der Phase verschobene zweite Signal zu einem Gesamtsensorsignal zu addieren und eine Phasenverschiebung des Gesamtsensorsignals relativ zur Phase des periodischen Magnetfeldes zu ermitteln.

Vorzugsweise weist die elektrische Querverbindung, insbesondere die erste und oder zweite elektrische Querverbindungskomponente, eine Vielzahl vorzugsweise gleicher elektrischer Querleiter auf, welche jeweils einen elektrischen Widerstand umfassen, wobei die elektrischen Querleiter die erste und zweite Leiterlängskomponente, insbesondere einen davon jeweils umfassten elektrischen Längsleiter, an zumindest teilweise verschiedenen Positionen entlang der Längserstreckung über den jeweiligen elektrischen Widerstand miteinander verbinden.

Vorzugsweise umfasst die elektrische Querverbindung, insbesondere die erste und oder zweite elektrische Querverbindungskomponente, eine elektrisch leitfähige Schicht (z.B. in Form eines Widerstandsbleches), welche die erste und zweite Leiterlängskomponente, insbesondere einen davon jeweils umfassten elektrischen Längsleiter, an einer Vielzahl von Positionen entlang der Längserstreckung durchgehend bzw. kontinuierlich verbindet.

Vorzugsweise ist dabei der elektrische Widerstand der leitfähigen Schicht zumindest so groß, vorzugsweise zumindest 5-mal so groß, noch mehr bevorzugt zumindest 10-mal so groß, weiter bevorzugt zumindest 50-mal so groß, besonders bevorzugt zumindest 500-mal so groß, am meisten bevorzugt zumindest 1000-mal so groß wie der elektrische Widerstand der ersten und/oder zweiten Leiterlängskomponente oder eines davon enthaltenen Längsleiters. Insbesondere sind die Leiterlängskomponenten vorzugsweise möglichst niederohmig. In einer bevorzugten Ausführungsform umfassen die Leiterlängskomponenten zumindest einen Längsleiter aus Kupfer mit einem Leiterquerschnitt von zumindest 1 mm$^2$. In einer bevorzugten Ausführungsform wird als elektrisch leitfähige Schicht eine Kupferlage bzw. Kupferbeschichtung einer gedruckten Leiterplatte (Platine) verwendet.

Vorzugsweise liegt die Frequenz des ersten und zweiter Stromsignals bzw. des Stromsignals in einem Bereich von etwa 50 Hz bis etwa 5 MHz, weiter bevorzugt in einem Bereich von etwa 500 Hz bis etwa 500 kHz, noch mehr bevorzugt in einem Bereich von etwa 5 kHz bis etwa 100 kHz, am meisten bevorzugt in einem Bereich von etwa 10 kHz bis etwa 50 kHz.

Vorzugsweise ist als Vielzahl von Positionen entlang der Längserstreckung eine Anzahl im Bereich von etwa 10 bis etwa 500, noch mehr bevorzugt in einem Bereich von etwa 20 bis etwa 200 vorgesehen. In einer bevorzugten Ausführungsform liegt ein Abstand benachbarter Positionen der Vielzahl von Positionen entlang der Längserstreckung im Bereich von etwa 2 mm bis etwa 5 cm noch mehr bevorzugt im Bereich von etwa 5 mm bis etwa 2 cm. In einer anderen bevorzugten Ausführungsform liegt ein Abstand benachbarter Positionen der Vielzahl von Positionen entlang der Längserstreckung im Bereich von etwa 10 cm bis etwa 10 m, noch mehr bevorzugt im Bereich von etwa 50 cm bis etwa 2 m. Vorzugsweise liegt der Abstand benachbarter Positionen der Vielzahl von Positionen entlang der Längserstreckung in einem Bereich von etwa 1/10 bis etwa 10-mal, noch mehr bevorzugt in einem bereich von etwa 1/5 bis etwa 5-mal, am meisten bevorzugt in einem Bereich von etwa ½ bis etwa 2-mal dem Abstand der ersten und zweiten Leiterlängskomponenten zueinander. Der Abstand der ersten und zweiten Leiterlängskomponenten zueinander entspricht dabei insbesondere der Länge der elektrischen Querleiter.

In einem weiteren Aspekt bietet die Erfindung ein Verfahren zur Positionsbestimmung umfassend die Schritte:

- Bereitstellen eines erste periodischen Stromsignals mit einer ersten Phase an ersten Endabschnitt einer ersten und einer zweiten Leiterlängskomponente, die sich entlang eines Messweges vom ersten Endabschnitt zu einem zweiten Endabschnitt der Leiterlängskomponenten erstrecken;
- Bereitstellen eines zweiten periodischen Stromsignals mit einer gegenüber der ersten Phase um eine bestimmte Phasenverschiebung verschobenen zweiten Phase am zweiten Endabschnitt der ersten und der zweiten Leiterlängskomponente;
- elektrisches Verbinden der ersten und zweiten Leiterlängskomponente an einer Vielzahl von Positionen entlang des Messweges derart, dass ein aufgrund des ersten Stromsignals in der ersten und zweiten Leiterlängskomponente fließender elektrischer Strom vom ersten Endabschnitt zum zweiten Endabschnitt hin monoton abnimmt, während ein aufgrund des zweiten Stromsignals in der ersten und zweiten Leiterlängskomponente fließender elektrischer Strom vom zweiten Endabschnitt zum ersten Endabschnitt hin monoton abnimmt;

- Erfassen eines durch den elektrischen Stromfluss in der ersten und zweiten Leiterlängskomponente erzeugten Magnetfeldes als Sensorsignal mittels eines relativ zu den Leiterlängskomponenten bewegbaren Sensorelements;
- Ermitteln einer Phasenlage bzw. Phasenverschiebung des erfassten Magnetfeldes (also des Sensorsignals) relativ zum ersten und/oder zweiten Stromsignal; und
- Bestimmen einer Position des Sensorelements relativ zu den Leiterlängskomponenten aus der ermittelten Phasenlage bzw. Phasenverschiebung des erfassten Magnetfeldes (also des Sensorsignals) relativ zum ersten und/oder zweiten Stromsignal.

In einem weiteren Aspekt bietet die Erfindung ein Verfahren zur Positionsbestimmung umfassend die Schritte:

- Erzeugen eines periodischen Magnetfeldes mittels eines Sendeelements, welches relativ zu einem Stromnetzwerk mit zumindest einer ersten und einer zweiten Leiterlängskomponente, die sich entlang einer Längserstreckung des Stromnetzwerks parallel zueinander von einem ersten Endabschnitt des Stromnetzwerks zu einem zweiten Endabschnitt des Stromnetzwerks erstrecken, bewegbar ist;
- Erfassen eines vom periodischen Magnetfeld induzierten ersten elektrischen Signals in einer erste Leiterspule mit einer Vielzahl von ersten Leiterwindungen, welche jeweils von einem ersten elektrischen Längsleiter der ersten Leiterlängskomponente, einem ersten elektrischen Längsleiter der zweiten Leiterlängskomponente, einem die erste und zweite Leiterlängskomponente am ersten Endabschnitt verbindenden Verbindungsleiter und einem zwischen dem ersten Endabschnitt und dem zweiten Endabschnitt angeordneten ersten Querleiter gebildet werden, wobei die ersten Querleiter der Vielzahl erster Leiterwindungen zumindest teilweise an unterschiedlichen Positionen entlang der Längserstreckung angeordnet sind und insbesondere senkrecht zur Längserstreckung verlaufen, und
- Erfassen eines vom periodischen Magnetfeld induzierten zweiten elektrischen Signals in einer zweiten Leiterspule mit einer Vielzahl von zweiten Leiterwindungen, welche jeweils von einem zweiten elektrischen Längsleiter der ersten Leiterlängskomponente, einem zweiten elektrischen Längsleiter der zweiten Leiterlängskomponente, einem die erste und zweite Leiterlängskomponente am zweiten Endabschnitt verbindenden Verbindungsleiter und einem zwischen dem ersten Endabschnitt und dem zweiten Endabschnitt angeordneten zweiten Querleiter gebildet werden, wobei die zweiten Querleiter der Vielzahl zweiter Leiterwindungen zumindest teilweise an unterschiedlichen Positionen entlang der Längserstreckung angeordnet sind und insbesondere senkrecht zur Längserstreckung verlaufen,
- Bestimmen einer Position des Sendeelements relativ zum Stromnetzwerk aus den erfassten elektrischen Signalen.

Vorzugsweise umfasst das Verfahren außerdem:

- Verschieben der Phase des erfassten zweiten elektrischen Signals um eine bestimmte Phasenverschiebung; und
- Ermitteln eines kombinierten Signals aus dem erfassten ersten elektrischen Signal und dem phasenverschobenen zweiten elektrischen Signal,

wobei das Bestimmen der Position des Sendeelements relativ zum Stromnetzwerk ein Ermitteln einer Phasenlage bzw. Phasenverschiebung des kombinierten Signals relativ zum periodischen Magnetfeld umfasst.

Vorzugsweise wird das erfindungsgemäße Verfahren mit einer erfindungsgemäßen Vorrichtung oder mit einer ihrer bevorzugten Ausführungsformen durchgeführt.

Die Erfindung wird nachfolgend mit Bezug auf begleitende Zeichnungen bevorzugter Ausführungsformen beispielhaft beschrieben, wobei für gleiche oder ähnliche Komponenten die gleichen Bezugszeichen verwendet werden und vorzugsweise die diesbezüglichen Beschreibungen in anderen Ausführungsformen entsprechend angewendet werden können. Dabei zeigen:

Fig. 1:     ein Stromnetzwerk und ein Sensorelement gemäß einer bevorzugten Ausführungsform der vorliegenden Erfindung;

Fig. 2     einzelne Sendekomponenten eines Sendemoduls und ein Sensorelement gemäß einer weiteren bevorzugten Ausführungsform der Erfindung;

Fig. 3     Simulationsergebnisse des zeitlichen Verlaufs des in der ersten Leiterlängskomponente an verschiedenen Positionen fließenden Gesamtstroms in einer Vorrichtung gemäß der bevorzugten Ausführungsform von Fig. 2;

Fig.4     Simulationsergebnisse des zeitlichen Verlaufs der im Sensorelement der Ausführungsform von Fig. 2 an verschiedenen Positionen erfassten Induktionsspannung;

Fig. 5          Simulationsergebnisse der ermittelten Phase $\alpha$ als Funktion der Position p;

Fig. 6          ein Stromnetzwerk und ein Sensorelement gemäß einer weiteren bevorzugten Ausführungsform der vorliegenden Erfindung in Rückwärtskopplung;

Fig. 7          einzelne Sendekomponenten eines Sendemoduls und ein Sensorelement gemäß einer weiteren bevorzugten Ausführungsform der Erfindung;

Fig. 8          ein Stromnetzwerk und ein Sensorelement gemäß der bevorzugten Ausführungsform von Fig. 7;

Fig. 9          ein Stromnetzwerk und ein Sensorelement gemäß einer weiteren bevorzugten Ausführungsform der vorliegenden Erfindung;

Fig. 10         ein Stromnetzwerk und ein Sensorelement gemäß einer weiteren bevorzugten Ausführungsform der vorliegenden Erfindung; und

Fig. 11A und 11B   schematische Darstellungen zur Veranschaulichung der Kombination mehrere Stromnetzwerke zur Bestimmung einer Position in zwei Dimensionen.

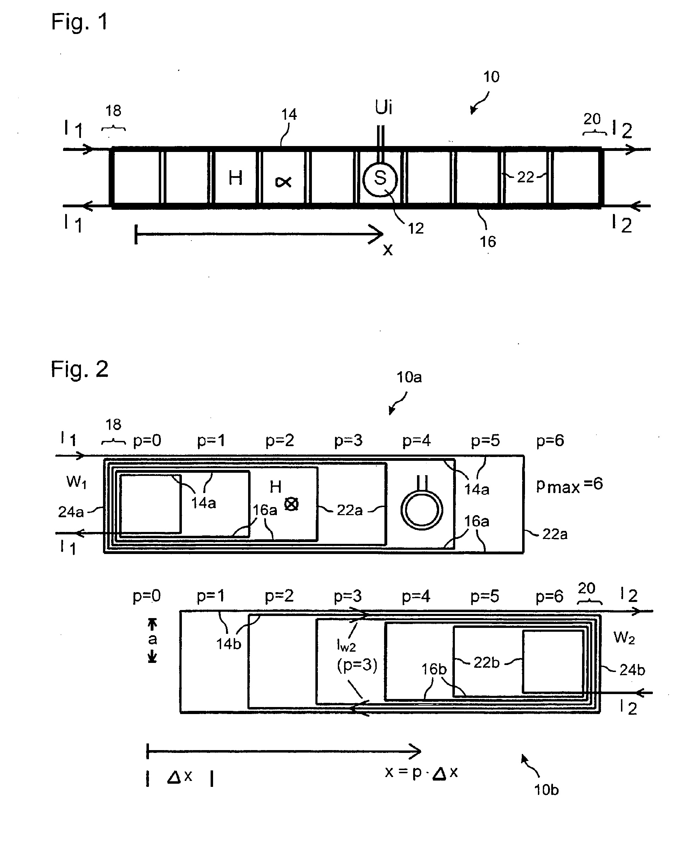

Fig. 1 zeigt ein Stromnetzwerk 10 und ein Sensorelement 12 einer Vorrichtung gemäß einer bevorzugten Ausführungsform der Erfindung. Das Sensorelement 12 umfasst dabei insbesondere eine Sensorspule S in welcher aufgrund eines veränderlichen Magnetfeldes eine Spannung $U_i$ induziert wird. Das Sensorelement 12 ist dabei relativ zum Stromnetzwerk 10 insbesondere entlang einer Längserstreckung x des Stromnetzwerks 10 bewegbar. Das Stromnetzwerk 10 umfasst eine erste Leiterlängskomponente 14 und eine dazu parallele zweite Leiterlängskomponente 16. Beide Leiterlängskomponenten erstrecken sich entlang der Längserstreckung x von einem ersten Endabschnitt 18 zu einem zweiten Endabschnitt 20 und werden dort jeweils mit einer ersten periodischen Stromsignal $I_1$ bzw. einem zweiten periodischen Stromsignal $I_2$ versorgt. Außerdem umfasst das Stromnetzwerk 10 in dieser Ausführungsform eine Querverbindung, die sich auch einer Vielzahl von Querleitern 22 zusammensetzt. Die Vielzahl der Querleiter 22 verbindet die erste Leiterlängskomponente 14 mit der zweiten Leiterlängskomponente 16 an einer Vielzahl von Positionen entlang der Längserstreckung x.

Vorzugsweise weist die Sensorspule S einen Durchmesser oder eine Längs- und/oder Quererstreckung auf, die in einem Bereich von zumindest etwa 1/10, noch mehr bevorzugt zumindest etwa 1/5, besonders bevorzugt zumindest etwa ½ des Abstandes der ersten und zweiten Leiterlängskomponente 14, 16 zueinander liegt. Besonders bevorzugt ist der Durchmesser oder die Längs- und/oder Quererstreckung der Sensorspule S nicht größer als der Abstand der ersten und zweiten Leiterlängskomponente 14, 16 zueinander. In einem weiteren Aspekt weist die Sensorspule S vorzugsweise einen Durchmesser oder eine Längs- und/oder Quererstreckung auf, die in einem Bereich von zumindest etwa 1/10, noch mehr bevorzugt zumindest etwa 1/5, besonders bevorzugt zumindest etwa ½ des Abstandes benachbarter Querleiter 22 zueinander liegt. Besonders bevorzugt ist der Durchmesser oder die Längs- und/oder Quererstreckung der Sensorspule S nicht größer als das 2-fache, noch mehr bevorzugt das 1-fache des Abstandes benachbarter Querleiter 22 zueinander.

Ein möglicher Aufbau des Stromnetzwerkes 10 gemäß einer bevorzugten Ausführungsform ist in Fig. 2 schematisch veranschaulicht. Insbesondere umfasst das Stromnetzwerk 10 demnach vorzugsweise eine erste Stromnetzwerkkomponente 10a und eine zweite Stromnetzwerkkomponente 10b. Dabei umfasst die erste Stromnetzwerkkomponente 10a eine erste Leiterspule bzw. Wicklung $W_1$ mit einer Vielzahl von ersten Leiterwindungen. Dabei wird jede erste Leiterwindung von einem ersten elektrischen Längsleiter 14a der ersten Leiterlängskomponente 14, einem ersten elektrischen Längsleiter 16a der zweiten Leiterlängskomponente 16, einem die erste 14 und zweite Leiterlängskomponente 16 am ersten Endabschnitt 18 verbindenden Verbindungsleiter 24a und einem von der ersten Querverbindungskomponente umfassten ersten Querleiter 22a gebildet. Dabei sind die von der ersten Querverbindungskomponente umfassten ersten Querleiter 22a der Vielzahl erster Leiterwindungen zumindest teilweise an unterschiedlichen Positionen entlang der Längserstreckung x angeordnet.

In analoger Weise umfasst die zweite Stromnetzwerkkomponente 10b eine zweite Leiterspule bzw. Wicklung $W_2$ mit einer Vielzahl von zweiten Leiterwindungen. Dabei wird jede zweite Leiterwindung von einem zweiten elektrischen Längsleiter 14b der ersten Leiterlängskomponente 14, einem zweiten elektrischen Längsleiter 16b der zweiten Leiterlängskomponente 16, einem die erste 14 und zweite Leiterlängskomponente 16 am zweiten Endabschnitt 20 verbindenden Verbindungsleiter 24b und einem von der zweiten Querverbindungskomponente umfassten zweiten Querleiter 22b gebildet. Dabei sind die von der zweiten Querverbindungskomponente umfassten zweiten Querleiter 22b der Vielzahl erster Leiterwindungen zumindest teilweise an unterschiedlichen Positionen entlang der Längserstreckung x angeordnet.

Das gesamte Stromnetzwerk 10 besteht somit aus den zwei Einzelwicklungen $W_1$ und $W_2$, welche geometrisch

dicht aufeinander liegen. In Fig. 2 sind diese Einzelwicklungen aus Gründen der besseren Darstellbarkeit getrennt gezeigt. Legt man die Wicklungen jedoch aufeinander, so entsteht wieder das System nach Fig. 1.

Vorzugsweise ist sowohl die erste $W_1$ als auch die zweite Wicklung $W_2$ im Wesentlichen planar angeordnet, d.h. die Windungen jeder der beiden Einzelwicklungen liegen jeweils in einer gemeinsamen Ebene bzw. Schicht. Die beiden Schichten sind im Sendemodul vorzugsweise mittelbar oder unmittelbar aufeinander gelegt. Das Sendemodule umfasst in dieser bevorzugten Ausführungsform somit eine Doppelschicht, wobei in jeder der beiden Schichten der Doppelschicht eine der beiden Wicklungen angeordnet ist.

Die Wicklungen $W_1$ und $W_2$ werden von den beiden Wechselströmen $I_1$ bzw. $I_2$ durchflossen. Dabei hat der Strom $I_2$ eine feste Phasenverschiebung $\alpha_2$ gegenüber dem Strom $I_1$ (Fig. 1). Diese Ströme des gesamten Stromnetzwerkes 10 erzeugen gemeinsam eine magnetische Wechselfeldstärke $H$ mit einer Phasenverschiebung $\alpha$, welche eine Funktion des zu detektierenden Weges $x$ ist. Die Phase der magnetischen Feldstärke variiert in Abhängigkeit von der Position $x$ vom Minimalwert Null bis zum Maximalwert $\alpha_2$. An der Position $x$ befindet sich die Induktionsspule S des Sensorelements 12, in welcher durch die Feldstärke $H$ eine Wechselspannung $U_i$ induziert wird. Die Phase $\alpha=\alpha(x)$ ist in dieser Wechselspannung enthalten und wird elektronisch ausgewertet.

Der wesentliche Vorteil des Sensors besteht darin, dass nur die Phase ausgewertet werden muss und nicht die Amplitude. Vergrößert sich aus irgendwelchen Gründen der Abstand der Induktionsspule S vom Stromnetzwerk 10 des Sendemoduls, so verkleinert sich zwar die Amplitude der Induktionsspannung $U_i$, die Phase verändert sich jedoch nicht.

In der praktischen Ausführung des Sensors hat sich als Betriebsfrequenz insbesondere die Frequenz des Uhrenquarzes mit f = 32768 Hz bewährt. Die Ströme $I_1$, und $I_2$ haben vorzugsweise Werte in der Größenordnung von wenigen Milli-Ampere.

In der in Fig. 2 dargestellten Ausführungsform handelt es sich bei der Wicklung $W_1$ handelt insbesondere um eine langgestreckte ebene Flachspule, bei der an jeder Position p entlang der Längserstreckung x vom ersten Endabschnitt 18 zum zweiten Endabschnitt 20 eine Einzelwindung zurückgeführt wird. Bei der Wicklung $W_2$ handelt es sich entsprechend um eine langgestreckte ebene Flachspule, bei der an jeder Position p entlang der Längserstreckung x vom ersten Endabschnitt 18 zum zweiten Endabschnitt 20 eine Einzelwindung hinzukommt.

In dieser prinzipiellen Beschreibung der schematischen Darstellung von Fig. 2 wird lediglich eine maximale Position von $p_{max}$ = 6 genutzt. In der praktischen Ausführung des Sensors kann man aber auch deutlich mehr diskrete Positionen und entsprechende Wicklungen realisieren. Das Grundprinzip besteht vorzugsweise darin, dass in der Wicklung $W_1$ die Anzahl der wirksamen felderzeugenden Leiter entlang des Weges x abnimmt und in der Wicklung $W_2$ die Anzahl der wirksamen felderzeugenden Leiter entlang des Weges x zunimmt.

Die Wicklungen $W_1$ und $W_2$ werden von den unterschiedlichen Wechselströmen

$$I_1 = I_0 \cdot \cos(2\pi f \cdot t) \quad \text{und} \quad I_2 = I_0 \cdot \cos(2\pi f \cdot t - \alpha_2)$$

durchflossen. Wichtig im Sinne dieses Aspekts der Erfindung ist die feste Phasenverschiebung $\alpha_2$ des Stromes $I_2$ gegenüber dem Bezugsstrom $I_1$. In der praktischen Ausführung des Sensors hat sich ein $\alpha_2$ in der Größenordnung von 30 ° bewährt.

Im Folgenden wird von wirksamen Strömen gesprochen. Dabei handelt es sich um die Gesamtheit der in den ersten 14a, 16a bzw. zweiten Längsleitern 14b, 16b der ersten 14 bzw. zweiten Leiterlängskomponente 16 fließenden Ströme. In Fig. 2 ist zur Veranschaulichung zum Beispiel der wirksame Strom $I_{W2}$ an der Position p = 3 gezeigt. Dort fließt 3-mal der Strom $I_2$. Nur die wirksamen Ströme erzeugen nennenswerte Feldstärken in der Induktionsspule. Die Felder der Ströme in den vertikalen Einzelleitern löschen sich zwischen den vertikalen Einzelleitern weitgehend aus und haben keinen nennenswerten Einfluss auf die Induktionsspule.

Bei der ersten Wicklung $W_1$ nimmt die Anzahl der stromdurchflossenen Leiter bei jeder Position p um eins ab. Bei der Position p=0 wirkt der Strom $I_1$ mit 6 Leitern. An der Position p = 5 ist noch ein Leiter wirksam und an der Stelle p = $p_{max}$ = 6 ist kein Leiter mehr vorhanden. Für den wirksamen Strom $I_{w1}$ der ersten Wicklung gilt damit

$$I_{w1} = (p_{max} - p) \cdot I_0 \cdot \cos(2\pi f \cdot t)$$

Nach rechts nimmt die Amplitude des wirksamen Stromes also mit der Position p ab. Bei der zweiten Wicklung $W_2$ nimmt die Anzahl der stromdurchflossenen Leiter bei jeder Position um eins zu. Bei der Position p = 0 wirkt der Strom $I_2$ mit Null Leitern. An der Position p = $p_{max}$ = 6 wirkt $I_2$ mit p = $p_{max}$ = 6 Leitern. Für den wirksamen Strom der rechten Wicklung gilt daher

$$I_{w2} = p \cdot I_0 \cdot \cos(2\pi f \cdot t - \alpha_2)$$

Nach rechts nimmt die Amplitude des wirksamen Stromes also mit der Position p zu. Daraus ergibt sich, dass links am Anfang der Strecke der Strom $I_1$ mit der Phase Null dominant felderzeugend ist und auf der rechten Seite der Strom $I_2$ mit der Phase $a_2 = 30°$. Dazwischen erfolgt ein kontinuierlicher Übergang der Phasendominanz von Null bis $\alpha_2$ = 30°.

Weil die beiden Wicklungen direkt aufeinander liegen, ist der gesamte wirkende Strom die Summe

$$I_w = I_{w1} + I_{w2},$$

entsprechend

$$I_w = (p_{\max} - p) \cdot I_0 \cdot \cos(2\pi f \cdot t) + p \cdot I_0 \cdot \cos(2\pi f \cdot t - \alpha_2)$$

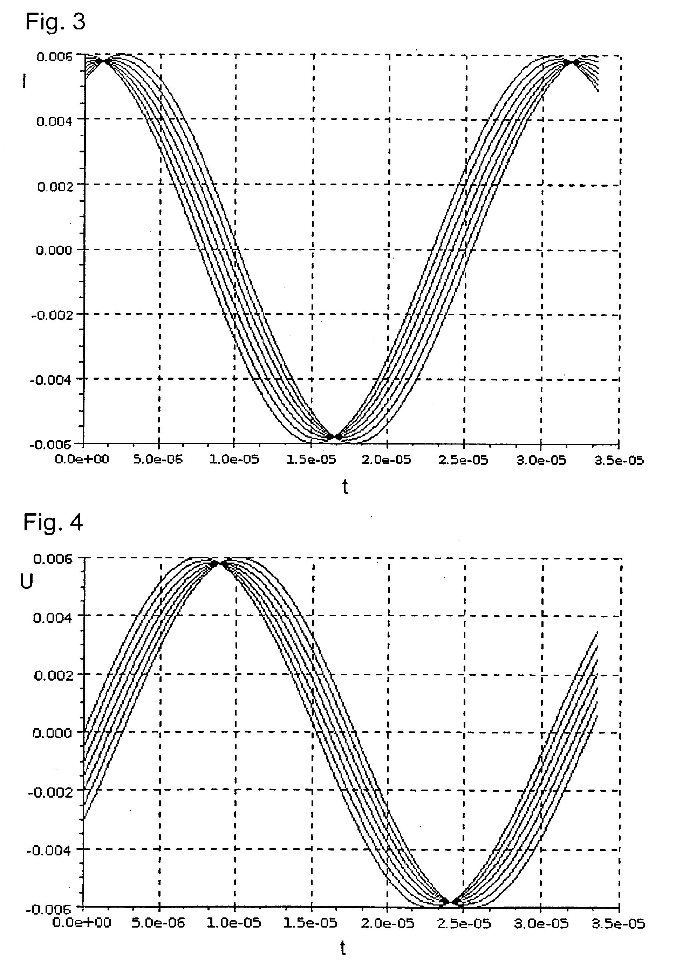

In Fig. 3 ist der wirksame Strom als Funktion der Zeit bei den Positionen p = 0 bis p = 6 dargestellt. Die Phasenverschiebungen sind an den Nulldurchgängen zu erkennen.

Ein wirksamer Strom $I_w$ bewirkt in geringem Abstand $a$ vom Leiterbündel die magnetische Feldstärke

$$H = \frac{I_w}{2 \cdot \pi \cdot a}.$$

Infolge der gleichzeitigen Wirkung der ersten und der zweiten Leiterlängskomponente haben die wirksamen Ströme doppelten Einfluss gemäß

$$H = \frac{2 \cdot I_w}{2 \cdot \pi \cdot a} = \frac{I_w}{\pi \cdot a}.$$

Die Wicklungen $W_1$ und $W_2$ erzeugen somit die Gesamtfeldstärke als Funktion der Position p zu

$$H = \frac{I_0}{\pi \cdot a} \cdot [(p_{\max} - p) \cdot \cos(2\pi f \cdot t) + p \cdot \cos(2\pi f \cdot t - \alpha_2)].$$

Diese Formel entspricht einer Näherung für die magnetische Feldstärke in der Mitte zwischen den beiden Leiterlängskomponenten unter der vereinfachenden Annahme, dass der erzeugende Leiterstrang, also die Leiterlängskomponenten unendlich dünn und unendlich lang sind.

Das Feld einzelner Längsleiter 14a, 14b, 16a, 16b endet nicht plötzlich am Ende des jeweiligen Längsleiters, also dort wo die Querleiter 22a, 22b vorgesehen sind, sondern wirkt noch ein wenig darüber hinaus. Die Feldstärke zeigt daher entlang des Weges keine Sprünge. Die Induktionspule empfängt die Feldstärke als Integral über ihre Fläche A. Falls diese Fläche A dann Abmessungen in der Größenordnung eines Weginkrementes $\Delta x$, also des Abstandes benachbarter Querleiter 22a, 22b hat, sind im Integral auch Feldeinflüsse der Nachbarelemente enthalten. Daraus begründet sich ein stufenfreier, kontinuierlicher Feldverlauf in Abhängigkeit von der Position entlang der Längserstreckung x. Das Feldintegral infolge von einzelnen und benachbarten Querleitern 22a, 22b ist zu vernachlässigen, falls die Fläche A ein Weginkrement $\Delta x$ überdeckt.

Unter Berücksichtigung dieser Diskussion berechnet sich die magnetische Flussdichte aus der magnetischen Feldstärke zu

$$B(p) = \mu_0 \cdot H(p)$$

und in der Fläche A der Induktionsspule S entsteht der magnetische Fluss

$$\Phi(p) = B(p) \cdot A = \mu_0 \cdot A \cdot H(p) \quad .$$

Mit der Windungszahl N der Induktionsspule gilt für die Induktionsspannung

$$U_i(p) = -N \cdot \frac{d\Phi(p)}{dt} = -N \cdot \mu_0 \cdot A \cdot \frac{dH(p)}{dt} \quad .$$

und daraus folgend

$$U_i(p) = \frac{N \cdot \mu_0 \cdot A \cdot I_0 \cdot 2\pi f}{\pi \cdot a} \cdot \left[ (p_{max} - p) \cdot \sin(2\pi f \cdot t) + p \cdot \sin(2\pi f \cdot t - \alpha_2) \right] \quad .$$

sowie zusammengefasst

$$U_i(p) = U_{i0} \cdot \left[ (p_{max} - p) \cdot \sin(2\pi f \cdot t) + p \cdot \sin(2\pi f \cdot t - \alpha_2) \right] \quad .$$

Eine graphische Darstellung ist in Fig. 4 zu sehen.

Die Phase sei durch den Nulldurchgang $U_i$=0 der zeitlich periodischen Funktion definiert. Dazu wird $2\pi f \cdot t$ durch die gesuchte Phase $\alpha$ ersetzt. Es entsteht dann die wichtige Gleichung

$$0 = (p_{max} - p) \cdot \sin(\alpha) + p \cdot \sin(\alpha - \alpha_2) \quad .$$

Diese nichtlineare Gleichung beschreibt den Zusammenhang zwischen der Position p und der Phase $\alpha$. Die numerische Lösung in den einzelnen Positionen ergibt vorteilhaft einen fast linearen Zusammenhang $\alpha$ (p):

| p | $\alpha$ |
|---|---|
| 0 | 0.000 |
| 1 | 4.871 |
| 2 | 9.896 |
| 3 | 15.000 |
| 4 | 20.103 |
| 5 | 25.128 |

6    30.000

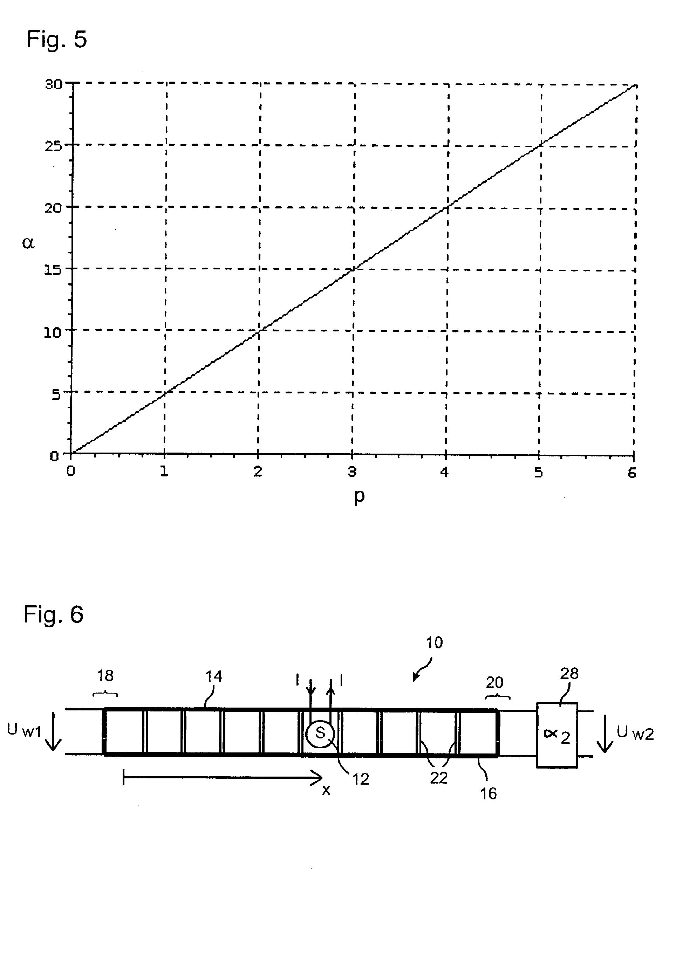

Mit nur kleinen Abweichungen ergeben sich 5° Phasenverschiebung pro Positionsschritt. Die Darstellung als kontinuierlicher Verlauf $\alpha$ in Abhängigkeit von p in Fig. 5 verdeutlicht dieses Ergebnis. Die Abweichungen von der Linearität hängen unmittelbar mit dem Wert von $\alpha_2 = 30°$ zusammen und liegen unter 0,5 Prozent. Verkleinert man $\alpha_2$ noch weiter, so nimmt auch die Nichtlinearität nochmals ab.

Die Phasenverschiebung bildet sich also in den periodischen Verlauf der Induktionsspannung ab. Aus diesem Signal wird die Phasenverschiebung $\alpha$ als relevante Größe mit bewährten Methoden der elektronischen Signalverarbeitung ermittelt und steht für die Berechnung der Sensorgröße x zur Verfügung.

Zwei benachbarte Positionen p haben den Abstand $\Delta x$ voneinander. Für den zu messenden Weg gilt $x = p \cdot \Delta x$. Der maximale Weg ist $x_{max} = P_{max} \cdot \Delta x$. Unter der Annahme, dass $\alpha_2$ nicht zu gross ist, kann der Zusammenhang zwischen $\alpha$ und p als näherungsweise linear gemäß

$$\frac{p}{p_{max}} = \frac{\alpha}{\alpha_2}$$

angenommen werden. Daher folgt für den zu detektierenden Weg

$$x = p \cdot \Delta x = p_{max} \cdot \frac{\alpha}{\alpha_2} \cdot \Delta x = \frac{x_{max}}{\alpha_2} \cdot \alpha$$

In der praktischen Ausführung des Sensors hat sich als Betriebsfrequenz die Frequenz eines Uhrenquarzes mit f = 32768Hz bewährt. Die Ströme $I_1$ und $I_2$ haben vorzugsweise Werte in der Größenordnung von wenigen Milli-Ampere. Die maximale Phasenverschiebung liegt vorzugsweise bei nicht mehr als etwa $\alpha_2$ =30°. Die bevorzugte Anzahl der Windungsrückführungen $p_{max}$ bzw. Querleiter 22a, 22b pro Querverbindungskomponente liegt im Bereich von etwa 10 bis etwa 100. Ein Wegincrement $\Delta x$ als die Abstände benachbarter Querleiter 22a, 22b hat als bevorzugte Abmessung einen Wert im Bereich von etwa 2 mm bis etwa 5 cm noch mehr bevorzugt im Bereich von etwa 5 mm bis etwa 2cm, am meisten bevorzugt einen Wert von etwa 1 cm.

In einer anderen bevorzugten Ausführungsform liegt ein Abstand benachbarter Positionen der Vielzahl von Positionen entlang der Längserstreckung (also insbesondere ein Abstand benachbarter Querleiter) im Bereich von etwa 10 cm bis etwa 10m, noch mehr bevorzugt im Bereich von etwa 50 cm bis etwa 2 m. Vorzugsweise liegt der Abstand benachbarter Positionen der Vielzahl von Positionen entlang der Längserstreckung (also insbesondere ein Abstand benachbarter Querleiter) in einem Bereich von etwa 1/10 bis etwa 10-mal, noch mehr bevorzugt in einem bereich von etwa 1/5 bis etwa 5-mal, am meisten bevorzugt in einem Bereich von etwa ½ bis etwa 2-mal dem Abstand der ersten und zweiten Leiterlängskomponenten zueinander. Der Abstand der ersten und zweiten Leiterlängskomponenten zueinander entspricht dabei insbesondere der Länge der elektrischen Querleiter.

Entsprechend gestaltet sich vorzugsweise der Durchmesser der Induktionsspule. Hat die Induktionsspule eine Windungszahl in der Größenordnung N = 100, so ergeben sich vorzugsweise Induktionsspannungen im Bereich mV. Die Wicklungen $W_1$ und $W_2$ können aus Draht bestehen oder sind als ebene Flachspulen auf Leiterplatten ausgeführt.

Das hier beschriebene Verfahren basiert auf einer induktiven Kopplung. Es ist dabei auch möglich, die Spule S als Sender und dann das aus den Wicklungen $W_1$ und $W_2$ bestehende Stromnetzwerk als Empfänger zu nutzen. Die geometrische Anordnung des Stromnetzwerks 10 und der Spule S bleibt im Wesentlichen unverändert, wie dies in Fig. 6 beispielhaft gezeigt ist. Gleiche oder ähnliche Komponenten werden dabei mit gleichen Bezugszeichen versehen und es wird in Bezug auf ihre Konstruktion auf die obigen Ausführungen bevorzugter Ausführungsformen verwiesen. Lediglich dient in der in Fig. 6 dargestellten bevorzugten Ausführungsform die Spule 6 als Sendeelement. Diese Variante soll als Rückwärtskopplung bezeichnet werden - im Gegensatz zur zuerst beschriebenen Vorwärtskopplung.

Für den Sendestrom der Spule S gilt

$$I_1 = I_0 \cdot \cos(2\pi f \cdot t)$$

Eine einzelne Windung in der Empfängerwicklung W1 empfängt eine sinusförmige Induktionsspannung

$$U_1 = U_0 \cdot \sin(2\pi f \cdot t)$$

An der Position p sind jedoch ($_{P\text{max}}$-$p$) Windungen wirksam. Also gilt jetzt für die wirksame Spannung

$$U_{w1} = (p_{\max} - p) \cdot U_0 \cdot \sin(2\pi f \cdot t)$$

Für die Wicklung $W_2$ sind p Windungen (Leiterschleifen) wirksam. In der hier dargestellten bevorzugten Ausführungsform umfasst eine Sensoreinrichtung einen elektronischen Phasenschieber 28. Damit wird die Induktionsspannung der zweiten Wicklung zusätzlich noch um die feste Phasenverschiebung $\alpha_2$ verschoben. Dann gilt

$$U_{w2} = p \cdot U_0 \cdot \sin(2\pi f \cdot t - \alpha_2)$$

Mit elektronischen Verfahren wird die Summe $U_w = U_{w1} + U_{w2}$ gebildet. Das Ergebnis

$$U_w = U_0 \cdot \left[(p_{\max} - p) \cdot \sin(2\pi f \cdot t) + p \cdot \sin(2\pi f \cdot t - \alpha_2)\right]$$

entspricht der Induktionsspannung bei der Vorwärtskopplung. Auch die weitere Auswertung ist genau so wie bei der Vorwärtskopplung.

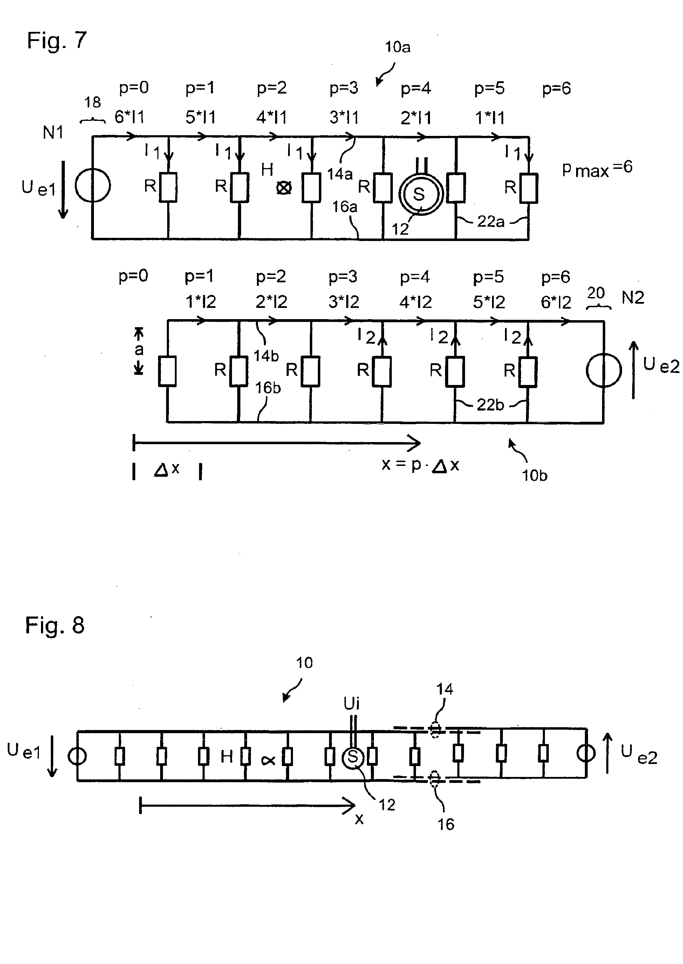

In einer weiteren bevorzugten Ausführungsform, wie sie mit Bezug auf Fig. 7 beschrieben wird, werden die oben beschriebenen Wicklungen $W_1$ und $W_2$ durch zwei einfache Widerstandsnetzwerke $N_1$ und $N_2$ ersetzt. Die entstehenden Ströme haben die gleiche geometrische Struktur wie beim gewickelten Sensor. Daher bleibt auch die Geometrie des Magnetfeldes unverändert.

In einem ersten Einzelnetzwerk $N_1$, welches eine erste Stromnetzwerkkomponente 10a bildet, besteht aus vielen parallel geschalteten gleichen Widerständen $R$, d.h. Querleiter 22a, 22b umfassen jeweils einen elektrischen Widerstand $R$. Geometrisch sind die einzelnen Widerstände zwischen der ersten und der zweiten Leiterlängskomponente bzw. den davon umfassten Längsleitern 11a und 16a jeweils im Abstand $\Delta x$ angeordnet. Zwischen dem ersten 14a und zweiten Längsleiter 14b liegt die Spannung $U_{e1}$ an. Alle Widerstände liegen an dieser Spannung und durch alle Widerstände fließt damit der gleiche Strom

$$I_1 = \frac{U_{e1}}{R}$$

In Fig.7 ist ein Beispielnetzwerk $N_1$ mit 6 Widerständen dargestellt. Die einspeisende Spannungsquelle $U_{e1}$ liefert an der Position p = 0 den Gesamtstrom $6 \cdot I_1$). Nach Abzweigung des Stromes $I_1$ im ersten Widerstand fließt im oberen Leiter an der Stelle p = 1 nur noch der Strom $5 \cdot I_1$. Pro weitere Position nimmt der Strom im oberen Leiter dann immer um jeweils einmal $I_1$ ab, bis bei p = 5 der Strom im oberen Leiter nur noch $1 \cdot I_1$ ist. Die felderzeugende Geometrie des Stromverlaufs ist also genauso wie bei der zuvor beschriebenen Wicklung $W_1$.

Ein zweites Einzelnetzwerk $N_2$, welches eine zweite Stromnetzwerkkomponente 10b bildet, ist entsprechend aufgebaut. Es wird am zweiten Endabschnitt mit der Quelle $U_{e2}$ gespeist (Fig. 7). In den Widerständen fließen die Ströme $I_2$. Mit wachsender Position p nimmt im horizontalen Leiter die Anzahl der wirksamen Ströme $I_2$ zu.

Das komplette Stromnetzwerk entsteht durch Aufeinanderlegen der beiden Einzelnetzwerke $N_1$ und $N_2$ (siehe Fig. 8), wie bereits mit Bezug auf Fig. 1 und 2 in analoger Weise beschrieben.

Zwischen den einspeisenden Spannungen $U_{e1}$ und $U_{e2}$ besteht wieder der bestimmte Phasenunterschied $\alpha_2$. Es gilt

$$U_{e1} = U_{e0} \cdot \cos(2\pi f \cdot t) \quad \text{und} \quad U_{e2} = U_{e0} \cdot \cos(2\pi f \cdot t - \alpha_2)$$

Daraus werden die Ströme in den Widerständen ermittelt mit

$$I_1 = \frac{U_{e1}}{R} \quad \text{und} \quad I_2 = \frac{U_{e2}}{R} \quad .$$

Es ergibt sich

$$I_1 = \frac{U_{e0}}{R} \cdot \cos(2\pi f \cdot t) \quad \text{und} \quad I_2 = \frac{U_{e0}}{R} \cdot \cos(2\pi f \cdot t - \alpha_2) \quad .$$

Mit der Abkürzung $\dfrac{U_{e0}}{R} = I_0$ erhält man dieselben Ausdrücke für die Ströme

$$I_1 = I_0 \cdot \cos(2\pi f \cdot t) \quad \text{und} \quad I_2 = I_0 \cdot \cos(2\pi f \cdot t - \alpha_2) \quad ,$$

welche sich schon bei der Speisung über die Wicklung ergeben hatten. Demnach sind auch das daraus folgende positionsabhängige Feld und die positionsabhängige Induktionsspannung genauso wie beim gewickelten Sensor.

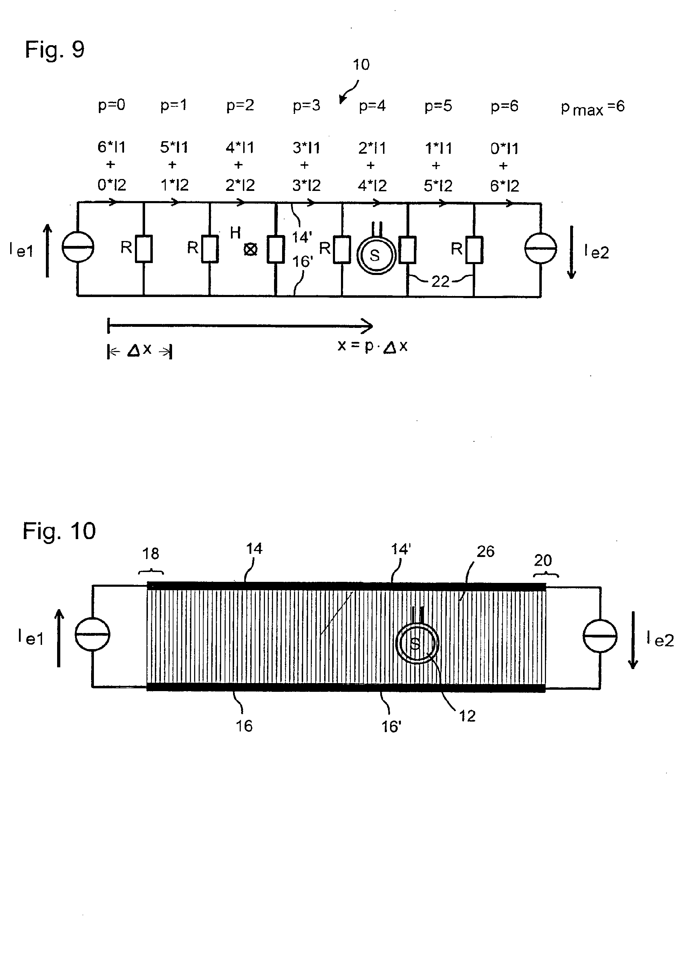

Bei den bisher vorgestellten Stromnetzwerken wird das Gesamtfeld durch Überlagerung (Superposition) der Magnetfelder von zwei Einzelnetzwerken erzeugt, die geometrisch direkt übereinander liegen. Eine vergleichbare Feldverteilung ist jedoch auch durch ein einzelnes Widerstandsnetzwerk zu erreichen, welches gleichzeitig von zwei Stromquellen $I_{e1}$ und $I_{e2}$ gespeist wird, wie dies an einer weiteren bevorzugten Ausführungsform mit Bezug auf Fig. 9 beschrieben wird.

Die Anzahl der Widerstände ist $p_{\max}$. Infolge von $I_{e1}$ soll in jedem Widerstand ein Strom $I_1$ von einem Längsleiter 14' der ersten Leiterlängskomponente abfließen. Infolge von $I_{e2}$ soll zusätzlich von jedem Widerstand ein Strom $I_2$ zum Längsleiter 10' der ersten Leiterlängskomponente hinzukommen. Also muss gelten

$$I_{e1} = p_{\max} \cdot I_1 \quad \text{und} \quad I_{e2} = p_{\max} \cdot I_2 \quad .$$

Die Wirkung von $I_{e1}$ im Längsleiter 14' der ersten Leiterlängskomponente nimmt mit steigender Position p ab, weil immer ein $I_1$ über einen Widerstand $R$ abfließt. Es gilt

$$I_{w1} = (p_{\max} - p) \cdot I_1 \quad .$$

Die Wirkung von $I_{e2}$ im Längsleiter 14' der ersten Leiterlängskomponente nimmt mit steigender Position p zu, weil über jeden Widerstand $R$ ein $I_2$ hinzukommt. Es gilt

$$I_{w2} = p \cdot I_2 \quad .$$

Die Superposition ergibt den wirksamen Gesamtstrom

$$I_w = I_{w1} + I_{w2} \quad ,$$

entsprechend

$$I_w = (p_{\max} - p) \cdot I_1 + p \cdot I_2 \quad .$$

Mit den phasenverschobenen Basisströmen

$$I_1 = I_0 \cdot \cos(2\pi f \cdot t) \quad \text{und} \quad I_2 = I_0 \cdot \cos(2\pi f \cdot t - \alpha_2) \quad ,$$

folgt wieder

$$I_w = (p_{\max} - p) \cdot I_0 \cdot \cos(2\pi f \cdot t) + p \cdot I_0 \cdot \cos(2\pi f \cdot t - \alpha_2)$$

Analoges gilt für einen Längsleiter 16' der zweiten Leiterlängskomponente. Dieser wirksame Gesamtstrom erzeugt wieder die von p abhängige Induktionsspannung an der Spule S.

Bei den bisher vorgestellten Ausführungsformen fließen an den einzelnen Positionen p diskrete Ströme $I_1$ und $I_2$ ab. Ersetzt man die Widerstände durch eine dünne Leiterfläche in Form einer elektrisch leitfähigen Schicht 26, so fließen diese Ströme gleichmäßig verteilt in Form eines Strömungsfeldes ab. Dabei entsteht das phasenkontinuierliche Sendemodul gemäß nach Fig. 10. Dabei sind die Längsleiter 14', 16' der ersten und zweiten Leiterlängskomponente vorzugsweise niederohmig gegenüber der elektrisch leitfähigen Fläche. Damit erreicht man einen besonders linearen Verlauf der elektrischen Stromstärke in den Längsleitern.

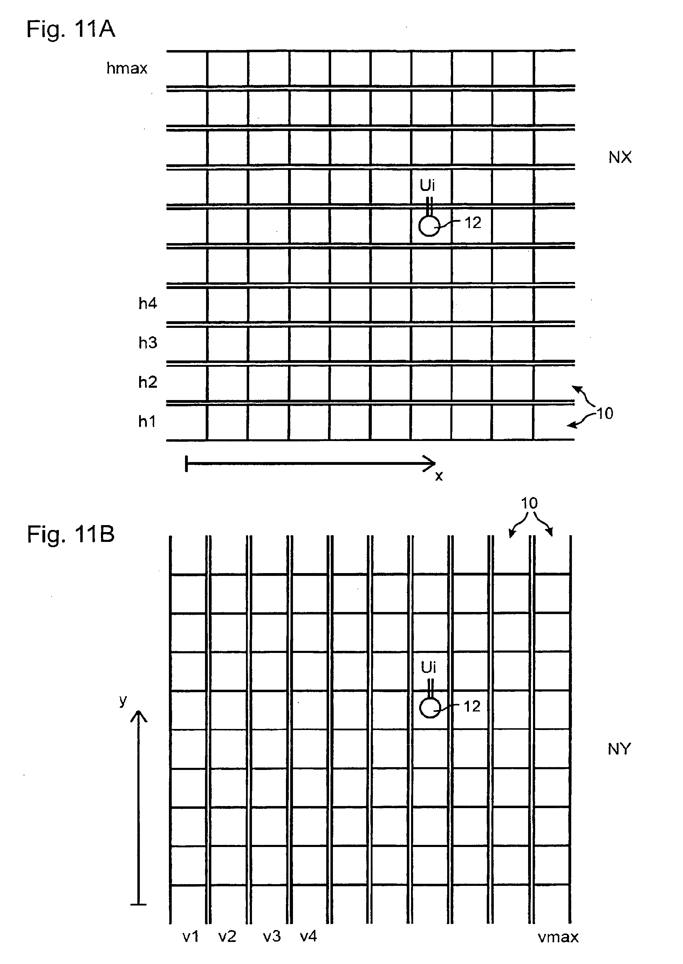

Mit den beschrieben Verfahren lassen sich von einer Induktionsspule auch die Koordinaten x und y in einer Ebene detektieren. Eine entsprechende Vorrichtung gemäß einer weiteren bevorzugen Ausführungsform basiert auf zwei übereinander gelegten ebenen Netzwerken NX und NY, wie sie beispielhaft in Fig. 11A und 11B schematisch dargestellt sind. Das Netzwerk NX erfasst die Position in x-Richtung. Es besteht aus den einzelnen horizontalen Wegsensoren h1, h2 ... bis $h_{\max}$, welche nacheinander aktiviert werden. Bei einem dieser horizontalen Wegsensoren wird die x-Position mit Sicherheit gefunden. Das Netzwerk NY bestimmt die Position in y-Richtung. Es besteht aus den einzelnen vertikalen Wegsensoren v1, v2 ... bis $V_{\max}$, welche nacheinander aktiviert werden. Bei einem dieser vertikalen Wegsensoren wird die γ-Position mit Sicherheit gefunden.

Jeder der horizontalen und vertikalen Wegsensoren ist dabei vorzugsweise als eine der erfindungsgemäßen Vorrichtungen zur Positionsbestimmung ausgebildet. Die horizontalen und vertikalen Netzwerke NX und NY können gewickelt ausgeführt sein oder auch aus den beschriebenen Widerstandsnetzwerken bestehen. Vorteilhaft im grundsätzlichen Sinne des phasenanalogen Wegsensors ist, dass sich die Position der Induktionsspule auch noch in großem Abstand oberhalb der Ebene detektieren lässt.

**Bezugszeichenliste**

10    Stromnetzwerk

| | |
|---|---|
| 10a | erste Stromnetzwerkkomponente |
| 10b | zweite Stromnetzwerkkomponente |
| 12 | Sensorelement bzw. Sendeelement |
| 14 | erste Leiterlängskomponente |
| 14' | Längsleiter der ersten Leiterlängskomponente |
| 14a | erster Längsleiter der ersten Leiterlängskomponente |
| 14b | zweiter Längsleiter der ersten Leiterlängskomponente |
| 16 | zweite Leiterlängskomponente |
| 16' | Längsleiter der zweiten Leiterlängskomponente |
| 16a | erster Längsleiter der zweiten Leiterlängskomponente |
| 16b | zweiter Längsleiter der zweiten Leiterlängskomponente |
| 18 | erster Endabschnitt |
| 20 | zweiter Endabschnitt |
| 22 | Querleiter |
| 22a | erster Querleiter |
| 22b | zweiter Querleiter |
| 24a | Verbindungsleiter |
| 24b | Verbindungsleiter |
| 26 | elektrisch leitfähige Schicht |
| 28 | Phasenschieber |

**Patentansprüche**

1. Vorrichtung zur Positionsbestimmung umfassend:

   - zumindest ein Sendemodul mit

     -- zumindest einer ersten und einer zweiten Leiterlängskomponente (14, 16), die sich entlang einer Längserstreckung (x) des Sendemoduls parallel zueinander von einem ersten Endabschnitt (18) des Sendemoduls zu einem zweiten Endabschnitt (20) des Sendemoduls erstrecken;
     -- einem ersten Signalgeber, welcher ausgelegt ist, am ersten Endabschnitt (18) des Sendemoduls in der ersten und zweiten Leiterlängskomponente (14, 16) ein erstes periodisches Stromsignal mit einer ersten Phase bereitzustellen;
     -- einem zweiten Signalgeber, welcher ausgelegt ist, am zweiten Endabschnitt (20) des Sendemoduls in der ersten und zweiten Leiterlängskomponente (14, 16)) ein zweites periodisches Stromsignal mit einer gegenüber der ersten Phase um eine bestimmte Phasenverschiebung ($\alpha_2$) verschobenen zweiten Phase bereitzustellen; und
     -- einer elektrischen Querverbindung, welche an einer Vielzahl von Positionen (p) entlang der Längserstreckung (x) des Sendemoduls die erste und zweite Leiterlängskomponente (14, 16) derart elektrisch leitend miteinander verbindet, dass ein aufgrund des ersten Stromsignals in der ersten und zweiten Leiterlängskomponente (14, 16) fließender elektrischer Strom vom ersten Endabschnitt (18) zum zweiten Endabschnitt (20) hin monoton abnimmt, während ein aufgrund des zweiten Stromsignals in der ersten und zweiten Leiterlängskomponente (14, 16) fließender elektrischer Strom vom zweiten Endabschnitt (20) zum ersten Endabschnitt (18) hin monoton abnimmt; und

   - eine Sensoreinrichtung, welche zumindest ein relativ zum Sendemodul bewegbares Sensorelement (12) umfasst, welches ausgelegt ist, ein durch den elektrischen Stromfluss in der ersten und zweiten Leiterlängskomponente erzeugtes Magnetfeld zu erfassen, wobei die Sensoreinrichtung ausgelegt ist, eine Phasenverschiebung des erfassten Magnetfeldes relativ zu einem periodischen Referenzsignal zu ermitteln, dessen Phase relativ zum ersten Stromsignal um eine Referenzphase verschoben ist.

2. Vorrichtung nach Anspruch 1, wobei die erste und zweite Leiterlängskomponente (14, 16) jeweils einen elektrischen Längsleiter (14', 16') umfasst, welcher sich jeweils vom ersten Endabschnitt (18), über welchen er mit dem ersten Signalgeber elektrisch verbunden ist, zum zweiten Endabschnitt (20) erstreckt, über welchen er mit dem zweiten Signalgeber elektrisch verbunden ist.

3. Vorrichtung nach Anspruch 1, wobei das Sendemodul umfasst:

- eine erste Stromnetzwerkkomponente (10a) mit

-- einem oder mehreren ersten elektrischen Längsleitern (14a) der ersten Leiterlängskomponente (14);

-- einem oder mehreren ersten elektrischen Längsleitern (16a) der zweiten Leiterlängskomponente (16); und

-- einer ersten Querverbindungskomponente, welche an einer Vielzahl von Positionen entlang der Längserstreckung des Sendemoduls den einen oder die mehreren ersten elektrischen Längsleiter (14a) der ersten Leiterlängskomponente (14) mit dem einen oder den mehreren ersten elektrischen Längsleitern (16a) der zweiten Leiterlängskomponente (16) derart elektrisch leitend verbindet, dass der aufgrund des ersten Stromsignals in dem ersten elektrischen Längsleiter (14a, 16a) bzw. den ersten elektrischen Längsleitern (14a, 16a) der ersten und zweiten Leiterlängskomponente (14, 16) fließende elektrische Strom vom ersten Endabschnitt (18) zum zweiten Endabschnitt (20) hin monoton abnimmt; und

- eine zweite Stromnetzwerkkomponente (10b) mit

-- einem oder mehreren zweiten elektrischen Längsleitern (14b) der ersten Leiterlängskomponente (14);

-- einem oder mehreren zweiten elektrischen Längsleitern (16b) der zweiten Leiterlängskomponente (16); und

-- einer zweiten Querverbindungskomponente, welche an einer Vielzahl von Positionen entlang der Längserstreckung des Sendemoduls den einen oder die mehreren zweiten elektrischen Längsleiter (14b) der ersten Leiterlängskomponente (14) mit dem einen oder den mehreren zweiten elektrischen Längsleitern (16b) der zweiten Leiterlängskomponente (16) derart elektrisch leitend verbindet, dass der aufgrund des ersten Stromsignals in dem zweiten elektrischen Längsleiter (14b, 16b) bzw. den zweiten elektrischen Längsleitern (14b, 16b) der ersten und zweiten Leiterlängskomponente (14, 16) fließende elektrische Strom vom zweiten Endabschnitt (20) zum ersten Endabschnitt (18) hin monoton abnimmt.

4. Vorrichtung nach Anspruch 3, wobei die erste Stromnetzwerkkomponente (10a) eine erste Leiterspule mit einer Vielzahl von ersten Leiterwindungen umfasst, welche jeweils von einem ersten elektrischen Längsleiter (14a) der ersten Leiterlängskomponente (14), einem ersten elektrischen Längsleiter (16a) der zweiten Leiterlängskomponente (16), einem die erste und zweite Leiterlängskomponente (14, 16) am ersten Endabschnitt (18) verbindenden Verbindungsleiter (24a) und einem von der ersten Querverbindungskomponente umfassten ersten Querleiter (22a) gebildet werden, wobei die von der ersten Querverbindungskomponente umfassten ersten Querleiter (22a) der Vielzahl erster Leiterwindungen zumindest teilweise an unterschiedlichen Positionen (p) entlang der Längserstreckung (x) angeordnet sind, und wobei die zweite Stromnetzwerkkomponente (10b) eine zweite Leiterspule mit einer Vielzahl von zweiten Leiterwindungen umfasst, welche jeweils von einem zweiten elektrischen Längsleiter (14b) der ersten Leiterlängskomponente (14), einem zweiten elektrischen Längsleiter (16b) der zweiten Leiterlängskomponente (16), einem die erste und zweite Leiterlängskomponente (14, 16) am zweiten Endabschnitt (20) verbindenden Verbindungsleiter (24b) und einem von der zweiten Querverbindungskomponente umfassten zweiten Querleiter (22b) gebildet werden, wobei die von der zweiten Querverbindungskomponente umfassten zweiten Querleiter (22b) der Vielzahl zweiter Leiterwindungen zumindest teilweise an unterschiedlichen Positionen (p) entlang der Längserstreckung (x) angeordnet sind.

5. Vorrichtung zur Positionsbestimmung umfassend:

- zumindest ein Sendeelement (12), welches ausgelegt ist, ein periodisches Magnetfeld zu erzeugen,

- zumindest ein relativ zum Sendeelement (12) bewegbares Stromnetzwerk (10) mit zumindest einer ersten und einer zweiten Leiterlängskomponente (14, 16), die sich entlang einer Längserstreckung (x) des Stromnetzwerks (10) parallel zueinander von einem ersten Endabschnitt (18) des Stromnetzwerks (10) zu einem zweiten Endabschnitt (20) des Stromnetzwerks (10) erstrecken, wobei das Stromnetzwerk (10) umfasst:

-- eine erste Stromnetzwerkkomponente (10a), welche eine erste Leiterspule mit einer Vielzahl von ersten Leiterwindungen umfasst, welche jeweils von einem ersten elektrischen Längsleiter (14a) der ersten Leiterlängskomponente (14), einem ersten elektrischen Längsleiter (16a) der zweiten Leiterlängskomponente (16), einem die erste und zweite Leiterlängskomponente (14, 16) am ersten Endabschnitt (18) verbindenden Verbindungsleiter (24a) und einem zwischen dem ersten Endabschnitt (18) und dem zweiten Endabschnitt (20) angeordneten ersten Querleiter (22a) gebildet werden, wobei die ersten Querleiter (22a) der Vielzahl erster Leiterwindungen zumindest teilweise an unterschiedlichen Positionen (p) entlang der Längserstreckung (x) angeordnet sind, und

-- eine zweite Stromnetzwerkkomponente (10b), welche eine zweite Leiterspule mit einer Vielzahl von zweiten Leiterwindungen umfasst, welche jeweils von einem zweiten elektrischen Längsleiter (14b) der ersten Leiterlängskomponente (14), einem zweiten elektrischen Längsleiter (16b) der zweiten Leiterlängskomponente (16), einem die erste und zweite Leiterlängskomponente (14, 16) am zweiten Endabschnitt (20) verbindenden Verbindungsleiter (24b) und einem zwischen dem ersten Endabschnitt (18) und dem zweiten Endabschnitt (20) angeordneten zweiten Querleiter (22b) gebildet werden, wobei die zweiten Querleiter (22b) der Vielzahl zweiter Leiterwindungen zumindest teilweise an unterschiedlichen Positionen (p) entlang der Längserstreckung (x) angeordnet sind; und

- eine Sensoreinrichtung, welche ausgelegt ist, ein in der ersten Leiterspule durch das periodische Magnetfeld induziertes erstes elektrisches Signal und ein in der zweiten Leiterspule durch das periodische Magnetfeld induziertes zweites elektrisches Signal zu erfassen.

6.  Vorrichtung nach Anspruch 5, wobei die Sensoreinrichtung einen Phasenschieber (28) umfasst, welcher ausgelegt ist, die Phase des erfassten zweiten Signals um eine bestimmte Phasenverschiebung ($\alpha_2$ zu verschieben, und wobei die Sensoreinrichtung ausgelegt ist, das erfasst erste Signal und das in der Phase verschobene zweite Signal zu einem Gesamtsensorsignal zu addieren und eine Phasenverschiebung des Gesamtsensorsignals relativ zur Phase des periodischen Magnetfeldes zu ermitteln.

7.  Vorrichtung nach einem der vorangegangenen Ansprüche, wobei die elektrische Querverbindung, insbesondere die erste und oder zweite elektrische Querverbindungskomponente, eine Vielzahl elektrischer Querleiter (22; 22a, 22b) aufweist, welche jeweils einen elektrischen Widerstand (R) umfassen, wobei die elektrischen Querleiter (22; 22a, 22b) die erste und zweite Leiterlängskomponente (14, 16), insbesondere einen davon jeweils umfassten elektrischen Längsleiter (14', 16'; 14a, 14b, 16a, 16b), an zumindest teilweise verschiedenen Positionen (p) entlang der Längserstreckung (x) über den jeweiligen elektrischen Widerstand (R) miteinander verbinden.

8.  Vorrichtung nach einem der vorangegangenen Ansprüche, wobei die elektrische Querverbindung, insbesondere die erste und oder zweite elektrische Querverbindungskomponente, eine elektrisch leitfähige Schicht (26) umfasst, welche die erste und zweite Leiterlängskomponente (14, 16), insbesondere einen davon jeweils umfassten elektrischen Längsleiter (14', 16'), an einer Vielzahl von Positionen (p) entlang der Längserstreckung (x) durchgehend verbindet.

9.  Vorrichtung nach Anspruch 8, wobei der elektrische Widerstand (R) der leitfähigen Schicht (26) zumindest so groß, vorzugsweise zumindest 5-mal so groß, noch mehr bevorzugt zumindest 10-mal so groß, weiter bevorzugt zumindest 50-mal so groß, besonders bevorzugt zumindest 500-mal so groß, am meisten bevorzugt zumindest 1000-mal so groß ist wie der elektrische Widerstand der ersten und/oder zweiten Leiterlängskomponente (14, 16).

10.  Vorrichtung nach einem der vorangegangenen Ansprüche, wobei die Frequenz des ersten und zweiter Stromsignals bzw. des Stromsignals in einem Bereich von etwa 50 Hz bis etwa 5 MHz, vorzugsweise in einem Bereich von etwa 500 Hz bis etwa 500 kHz, noch mehr bevorzugt in einem Bereich von etwa 5 kHz bis etwa 100 kHz, am meisten bevorzugt in einem Bereich von etwa 10 kHz bis etwa 50 kHz liegt.

11.  Vorrichtung nach einem der vorangegangenen Ansprüche, wobei als Vielzahl von Positionen (p) entlang der Längserstreckung (x) eine Anzahl im Bereich von etwa 10 bis etwa 500, vorzugsweise im Bereich von etwa 20 bis etwa 200 vorgesehen ist.

12.  Vorrichtung nach einem der vorangegangenen Ansprüche, wobei ein Abstand benachbarter Positionen (p) der Vielzahl von Positionen entlang der Längserstreckung (x) im Bereich von etwa 1/10 bis etwa 10-mal, vorzugsweise in einem Bereich von etwa 1/5 bis etwa 5-mal, am meisten bevorzugt in einem Bereich von etwa ½ bis etwa 2-mal dem Abstand der ersten und zweiten Leiterlängskomponenten zueinander liegt.

13.  Verfahren zur Positionsbestimmung umfassend die Schritte:

- Bereitstellen eines erste periodischen Stromsignals mit einer ersten Phase an einem ersten Endabschnitt (18) einer ersten und einer zweiten Leiterlängskomponente (14, 16), die sich entlang eines Messweges (x) vom ersten Endabschnitt (18) zu einem zweiten Endabschnitt (20) der Leiterlängskomponenten (14, 16) erstrecken;
- Bereitstellen eines zweiten periodischen Stromsignals mit einer gegenüber der ersten Phase um eine bestimmte Phasenverschiebung ($\alpha_2$) verschobenen zweiten Phase am zweiten Endabschnitt (20) der ersten und der zweiten Leiterlängskomponente (14, 16);
- elektrisches Verbinden der ersten und zweiten Leiterlängskomponente (14, 16) an einer Vielzahl von Positionen (p) entlang des Messweges (x) derart, dass ein aufgrund des ersten Stromsignals in der ersten und zweiten Leiterlängskomponente (14, 16) fließender elektrischer Strom vom ersten Endabschnitt (18) zum zweiten Endabschnitt (20) hin monoton abnimmt, während ein aufgrund des zweiten Stromsignals in der ersten und zweiten Leiterlängskomponente (14, 16) fließender elektrischer Strom vom zweiten Endabschnitt (20) zum ersten Endabschnitt (18) hin monoton abnimmt;
- Erfassen eines durch den elektrischen Stromfluss in der ersten und zweiten Leiterlängskomponente (14, 16) erzeugten Magnetfeldes mittels eines relativ zu den Leiterlängskomponenten bewegbaren Sensorelements (12);
- Ermitteln einer Phasenverschiebung des erfassten Magnetfeldes relativ zum ersten und/oder zweiten Stromsignal; und
- Bestimmen einer Position des Sensorelements (12) relativ zu den Leiterlängskomponenten (14, 16) aus der ermittelten Phasenverschiebung des erfassten Magnetfeldes relativ zum ersten und/oder zweiten Stromsignal.

**14.** Verfahren zur Positionsbestimmung umfassend die Schritte:

- Erzeugen eines periodischen Magnetfeldes mittels eines Sendeelements (12), welches relativ zu einem Stromnetzwerk (10) mit zumindest einer ersten und einer zweiten Leiterlängskomponente (14, 16), die sich entlang einer Längserstreckung (x) des Stromnetzwerks (10) parallel zueinander von einem ersten Endabschnitt (18) des Stromnetzwerks (10) zu einem zweiten Endabschnitt (20) des Stromnetzwerks (10) erstrecken, bewegbar ist;
- Erfassen eines vom periodischen Magnetfeld induzierten ersten elektrischen Signals in einer erste Leiterspule mit einer Vielzahl von ersten Leiterwindungen, welche jeweils von einem ersten elektrischen Längsleiter (14a) der ersten Leiterlängskomponente (14), einem ersten elektrischen Längsleiter (16a) der zweiten Leiterlängskomponente (16), einem die erste und zweite Leiterlängskomponente (14, 16) am ersten Endabschnitt (18) verbindenden Verbindungsleiter (24a) und einem zwischen dem ersten Endabschnitt (18) und dem zweiten Endabschnitt (20) angeordneten ersten Querleiter (22a) gebildet werden, wobei die ersten Querleiter (22a) der Vielzahl erster Leiterwindungen zumindest teilweise an unterschiedlichen Positionen (p) entlang der Längserstreckung (x) angeordnet sind, und
- Erfassen eines vom periodischen Magnetfeld induzierten zweiten elektrischen Signals in einer zweiten Leiterspule mit einer Vielzahl von zweiten Leiterwindungen, welche jeweils von einem zweiten elektrischen Längsleiter (14b) der ersten Leiterlängskomponente (14), einem zweiten elektrischen Längsleiter (16b) der zweiten Leiterlängskomponente (16), einem die erste und zweite Leiterlängskomponente (14, 16) am zweiten Endabschnitt (20) verbindenden Verbindungsleiter (24b) und einem zwischen dem ersten Endabschnitt (18) und dem zweiten Endabschnitt (20) angeordneten zweiten Querleiter (22b) gebildet werden, wobei die zweiten Querleiter (22b) der Vielzahl zweiter Leiterwindungen zumindest teilweise an unterschiedlichen Positionen (p) entlang der Längserstreckung (x) angeordnet sind,
- Bestimmen einer Position des Sendeelements (12) relativ zum Stromnetzwerk (10) aus den erfassten elektrischen Signalen.

**15.** Verfahren nach Anspruch 14, außerdem umfassend

- Verschieben der Phase des erfassten zweiten elektrischen Signals um eine bestimmte Phasenverschiebung ($\alpha_2$); und
- Ermitteln eines kombinierten Signals aus dem erfassten ersten elektrischen Signal und dem phasenverschobenen zweiten elektrischen Signal,

wobei das Bestimmen der Position des Sendeelements (12) relativ zum Stromnetzwerk (10) ein Ermitteln einer Phasenlage des kombinierten Signals relativ zum periodischen Magnetfeld umfasst.

**Claims**

**1.** An apparatus for position determination comprising:

- at least one transmitter module with

-- at least a first and a second longitudinal conductive components (14, 16), which extend along a longitudinal extension (x) of the transmitter module parallel to each other from a first end section (18) of the transmitter module to a second end section (20) of the transmitter module;

-- a first signal transducer, which is configured to provide at the first end section (18) of the transmitter module in the first and second longitudinal conductive components (14, 16) a first periodic current signal with a first phase;

-- a second signal transducer, which is configured to provide at the second end section (20) of the transmitter module in the first and second longitudinal conductive components (14, 16) a second periodic current signal with a second phase that has a predetermined phase shift ($\alpha_2$) relative to the first phase; and

-- an electrical cross-connection, which electrically conductively connects the first and second longitudinal conductive components (14, 16) at a plurality of positions (p) along the longitudinal extension (x) of the transmitter module, such that an electrical current, flowing in the first and second longitudinal conductive components (14, 16) due to the first current signal, monotonically decreases from the first end section (18) to the second end section (20), while an electrical current, flowing in the first and second longitudinal conductive components (14, 16) due to the second current signal, monotonically decreases from the second end section (20) to the first end section (18); and

- a sensor device, which comprises at least a sensor element (12) displaceable relative to the transmitter module, which is configured to detect a magnetic field generated by the electrical current flow in the first and second longitudinal conductive components, wherein the sensor device is configured to detect a phase shift of the detected magnetic field relative to a periodic reference signal, the phase of which is shifted by a reference phase relative to the first current signal.

**2.** The apparatus according to claim 1, wherein the first and second longitudinal conductive components (14, 16) comprise each an electrical longitudinal conductor (14', 16'), and each one extends from the first end section (18), by means of which it is electrically connected to the first signal transducer, to the second end section (20), by means of which it is electrically connected to the second signal transducer.

**3.** The apparatus according to claim 1, wherein the transmitter module comprises:

- a first current network component (10a) with

-- one or more first electrical longitudinal conductors (14a) of the first longitudinal conductive component (14);
-- one or more first electrical longitudinal conductors (16a) of the second longitudinal conductive component (16); and
-- a first cross-connection component, which electrically conductively connects the one or more first electrical longitudinal conductors (14a) of the first longitudinal conductive component (14) with the one or more first electrical longitudinal conductors (16a) of the second longitudinal conductive component (16) at a plurality of positions along the longitudinal extension of the transmitter module, such that an electrical current, flowing in the first electrical longitudinal conductor(s) (14a, 16a) of the first and second longitudinal conductive components (14, 16) due to the first current signal, monotonically decreases from the first end section (18) to the second end section (20); and

- a second current network component (10b) with

-- one or more second electrical longitudinal conductors (14b) of the first longitudinal conductive component (14);
-- one or more second electrical longitudinal conductors (16b) of the second longitudinal conductive component (16); and
-- a second cross-connection component, which electrically conductively connects the one or more second electrical longitudinal conductors (14b) of the first longitudinal conductive component (14) with the one or more second electrical longitudinal conductors (16b) of the second longitudinal conductive component (16) at a plurality of positions along the longitudinal extension of the transmitter module, such that an electrical current, flowing in the second electrical longitudinal conductor(s) (14b, 16b) of the first and second longitudinal conductive components (14, 16) due to the second current signal, monotonically decreases from the second end section (20) to the first end section (18).

**4.** The apparatus according to claim 3, wherein the first current network component (10a) comprises a first conductive coil with a plurality of first conductive windings, each one formed by a first electrical longitudinal conductor (14a) of the first longitudinal conductive component (14), a first electrical longitudinal conductor (16a) of the second longitudinal conductive component (16), a connecting conductor (24a) connecting the first and second longitudinal conductive components (14, 16) at the first end section (18) and a first cross-conductor (22a) comprised in the first cross-connection component, wherein the first cross-conductors (22a) of the plurality of first conductive windings, the first cross-conductors (22a) being comprised in the first cross-connection component, are arranged at least partly at different positions (p) along the longitudinal extension (x), and

wherein the second current network component (10b) comprises a second conductive coil with a plurality of second conductive windings, each one formed by a second electrical longitudinal conductor (14b) of the first longitudinal conductive component (14), a second electrical longitudinal conductor (16b) of the second longitudinal conductive component (16), a connecting conductor (24b) connecting the first and second longitudinal conductive components (14, 16) at the second end section (20) and a second cross-conductor (22b) comprised in the second cross-connection component, wherein the second cross-conductors (22b) of the plurality of second conductive windings, the second cross-conductors (22b) being comprised in the second cross-connection component, are arranged at least partly at different positions (p) along the longitudinal extension (x).

5. An apparatus for position determination comprising:

- at least one transmitter element (12), which is configured to generate a periodic magnetic field,
- at least one current network (10) displaceable relative to the transmitter element (12) with at least a first and a second longitudinal conductive components (14, 16), which extend along a longitudinal extension (x) of the current network (10) parallel to each other from a first end section (18) of the current network (10) to a second end section (20) of the current network (10), wherein the current network (10) comprises:

-- a first current network component (10a), which comprises a first conductive coil with a plurality of first conductive windings, each one formed by a first electrical longitudinal conductor (14a) of the first longitudinal conductive component (14), a first electrical longitudinal conductor (16a) of the second longitudinal conductive component (16), a connecting conductor (24a) connecting the first and second longitudinal conductive components (14, 16) at the first end section (18) and a first cross-conductor (22a) arranged between the first end section (18) and the second end section (20), wherein the first cross-conductors (22a) of the plurality of first conductive windings are arranged at least partly at different positions (p) along the longitudinal extension (x), and

-- a second current network component (10b), which comprises a second conductive coil with a plurality of second conductive windings, each one formed by a second electrical longitudinal conductor (14b) of the first longitudinal conductive component (14), a second electrical longitudinal conductor (16b) of the second longitudinal conductive component (16), a connecting conductor (24b) connecting the first and second longitudinal conductive components (14, 16) to the second end section (20) and a second cross-conductor (22b) arranged between the first end section (18) and the second end section (20), wherein the second cross-conductors (22b) of the plurality of second conductive windings are arranged at least partly at different positions (p) along the longitudinal extension (x); and

- a sensor device, which is configured to detect a first electrical signal induced in the first conductive coil by the periodic magnetic field and a second electrical signal induced in the second conductive coil by the periodic magnetic field.

6. The apparatus according to claim 5, wherein the sensor device comprises a phase shifter (28), which is configured to shift the phase of the detected second signal by a predetermined phase shift ($\alpha_2$), and wherein the sensor device is configured to add the detected first signal and the phase-shifted second signal into an overall sensor signal and to determine a phase shift of the overall sensor signal relative to the phase of the periodic magnetic field.

7. The apparatus according to any of the preceding claims, wherein the electrical cross-connection, in particular the first and/or second electrical cross-connection components, features a plurality of electrical cross-conductors (22; 22a, 22b), each one comprising an electrical resistance (R), wherein the electrical cross-conductors (22; 22a, 22b) connect the first and second longitudinal conductive components (14, 16), in particular one of the electrical longitudinal conductors (14', 16'; 14a, 14b, 16a, 16b) respectively comprised therein, to each other in at least partly different positions (p) along the longitudinal extension (x) by means of the respective electrical resistance (R).

8. The apparatus according to any of the preceding claims, wherein the electrical cross-connection, in particular the first and/or the second electrical cross-connection component, comprises an electrically conductive layer (26), which continuously connects the first and second longitudinal conductive components (14, 16), in particular one of the electrical longitudinal conductors (14', 16') respectively comprised therein, in a plurality of positions (p) along the longitudinal extension (x).

9. The apparatus according to claim 8, wherein the electrical resistance (R) of the conductive layer (26) is at least as large as, preferably at least 5 times, more preferred at least 10 times, further preferred at least 50 times, especially preferred at least 500 times, most preferred at least 1000 times the electrical resistance of the first and/or second longitudinal conductive components (14, 16).

10. The apparatus according to any of the preceding claims, wherein the frequency of the first and second current signal or of the current signal lies in a range from about 50 Hz to about 5 MHz, preferably in a range from about 500 Hz to about 500 kHz, more preferred in a range from about 5 kHz to about 100 kHz, most preferred in a range from about 10 kHz to about 50 kHz.

11. The apparatus according to any of the preceding claims, wherein as plurality of positions (p) along the longitudinal extension (x) a quantity in the range from about 10 to about 500, preferably in the range from about 20 to about 200, is provided.

12. The apparatus according to any of the preceding claims, wherein a distance between adjacent positions (p) of the plurality of positions along the longitudinal extension (x) lies in the range from about 1/10 to about 10 times, preferably in a range from about 1/5 to about 5 times, most preferred in a range from about ½ to about 2 times, the distance between the first and the second longitudinal conductive components.

13. A method for position determination comprising the steps:

- providing a first periodic current signal with a first phase at a first end section (18) of a first and a second longitudinal conductive components (14, 16), which extend along a measurement path (x) from the first end section (18) to a second end section (20) of the longitudinal conductive components (14, 16);
- providing at the second end section of the first and second longitudinal conductive components (14, 16) a second periodic current signal with a second phase that has a predetermined phase shift ($\alpha_2$) relative to the first phase;
- electrically connecting the first and second longitudinal conductive components (14, 16) in a plurality of positions (p) along the measurement path (x), such that an electrical current, flowing in the first and second longitudinal conductive components (14, 16) due to the first current signal, monotonically decreases from the first end section (18) to the second end section (20), while an electrical current, flowing in the first and second longitudinal conductive components (14, 16) due to the second current signal, monotonically decreases from the second end section (20) to the first end section (18);
- detecting a magnetic field generated by the electrical current flow in the first and second longitudinal conductive components (14, 16) by means of a sensor element (12) displaceable relative to the longitudinal conductive components;
- detecting a phase shift of the detected magnetic field relative to the first and/or second current signal; and
- determining a position of the sensor element (12) relative to the longitudinal conductive components (14, 16) from the detected phase shift of the detected magnetic field relative to the first and/or second current signal.

14. A method for position determination comprising the steps:

- generating a periodic magnetic field by means of a transmitter element (12), which is displaceable relative to a current network (10) with at least a first and a second longitudinal conductive components (14, 16), which extend parallel to each other along a longitudinal extension (x) of the current network (10) from a first end section (18) of the current network (10) to a second end section (20) of the current network (10);
- detecting a first electrical signal induced by the periodic magnetic field in a first conductive coil with a plurality of first conductive windings, each one formed by a first electrical longitudinal conductor (14a) of the first longitudinal conductive component (14), a first electrical longitudinal conductor (16a) of the second longitudinal conductive component (16), a connecting conductor (24a) connecting the first and second longitudinal conductive components (14, 16) at the first end section (18) and a first cross-conductor (22a) arranged between the first end section (18) and the second end section (20), wherein the first cross-conductors (22a) of the plurality of first conductive windings are arranged at least partly at different positions (p) along the longitudinal extension (x), and

- detecting a second electrical signal induced by the periodic magnetic field in a second conductive coil with a plurality of second conductive windings, each one formed by a second electrical longitudinal conductor (14b) of the first longitudinal conductive component (14), a second electrical longitudinal conductor (16b) of the second longitudinal conductive component (16), a connecting conductor (24b) connecting the first and second longitudinal conductive components (14, 16) to the second end section (20) and a second cross-conductor (22b) arranged between the first end section (18) and the second end section (20), wherein the second cross-conductors (22b) of the plurality of second conductive windings are arranged at least partly at different positions (p) along the longitudinal extension (x),
- determining a position of the transmitter element (12) relative to the current network (10) from the detected electrical signals.

**15.** The method according to claim 14, further comprising

- shifting the phase of the detected second electrical signal by a predetermined phase shift ($\alpha_2$); and
- determining a combined signal from the detected first electrical signal and the phase-shifted second electrical signal,

wherein the position determination of the transmitter element (12) relative to the current network (10) comprises determining a phasing of the combined signal relative to the periodic magnetic field.

**Revendications**

**1.** Dispositif de détermination de position comprenant :

- au moins un module d'émission avec

-- au moins un premier et un second composant longitudinal conducteur (14, 16) qui s'étendent le long d'une étendue longitudinale (x) du module d'émission parallèlement l'un à l'autre d'une première section d'extrémité (18) du module d'émission à une seconde section d'extrémité (20) du module d'émission ;
-- un premier générateur de signal qui est conçu pour mettre à disposition un premier signal de courant périodique avec une première phase au niveau de la première section d'extrémité (18) du module d'émission dans les premier et second composants longitudinaux conducteurs (14, 16) ;
-- un second générateur de signal qui est conçu pour mettre à disposition un second signal de courant périodique avec une seconde phase décalée d'un décalage de phases déterminé ($\alpha_2$) par rapport à la première phase au niveau de la seconde section d'extrémité (20) du module d'émission dans les premier et second composants longitudinaux conducteurs (14, 16) ; et
-- une connexion transversale électrique qui relie les premier et second composants longitudinaux conducteurs (14, 16) ensemble de manière électriquement conductrice en une pluralité de positions (p) le long de l'étendue longitudinale (x) du module d'émission de telle sorte qu'un courant électrique s'écoulant dans les premier et second composants longitudinaux conducteurs (14, 16) en raison du premier signal de courant décroît de manière monotone de la première section d'extrémité (18) à la seconde section d'extrémité (20) tandis qu'un courant électrique s'écoulant dans les premier et second composants longitudinaux conducteurs (14, 16) en raison du second signal de courant décroît de manière monotone de la seconde section d'extrémité (20) à la première section d'extrémité (18) ; et

- un dispositif de capteur qui comprend au moins un élément de capteur (12) pouvant être déplacé par rapport au module d'émission qui est conçu pour détecter un champ magnétique généré par l'écoulement de courant électrique dans les premier et second composants longitudinaux conducteurs, dans lequel le dispositif de capteur est conçu pour déterminer un décalage de phases du champ magnétique détecté par rapport à un signal de référence périodique dont la phase est décalée d'une phase de référence par rapport au premier signal de courant.

**2.** Dispositif selon la revendication 1, dans lequel les premier et second composants longitudinaux conducteurs (14, 16) comprennent chacun un conducteur longitudinal électrique (14', 16') qui s'étend à chaque fois de la première section d'extrémité (18) par le biais de laquelle il est relié électriquement au premier générateur de signal à la seconde section d'extrémité (20) par le biais de laquelle il est relié électriquement au second générateur de signal.

**3.** Dispositif selon la revendication 1, dans lequel le module d'émission comprend :

- un premier composant de réseau électrique (10a) avec

-- un ou plusieurs premiers conducteurs longitudinaux électriques (14a) du premier composant longitudinal conducteur (14) ;
-- un ou plusieurs premiers conducteurs longitudinaux électriques (16a) du second composant longitudinal conducteur (16) ; et
-- un premier composant de connexion transversale qui relie le ou les premiers conducteurs longitudinaux électriques (14a) du premier composant longitudinal conducteur (14) au ou aux premiers conducteurs longitudinaux électriques (16a) du second composant longitudinal conducteur (16) de manière électriquement conductrice en une pluralité de positions le long de l'étendue longitudinale du module d'émission de telle sorte que le courant électrique s'écoulant dans le premier conducteur longitudinal électrique (14a, 16a) ou les premiers conducteurs longitudinaux électriques (14a, 16a) des premier et second composants longitudinaux conducteurs (14, 16) en raison du premier signal de courant décroît de manière monotone de la première section d'extrémité (18) à la seconde section d'extrémité (20) ; et

- un second composant de réseau électrique (10b) avec

-- un ou plusieurs seconds conducteurs longitudinaux électriques (14b) du premier composant longitudinal conducteur (14) ;
-- un ou plusieurs seconds conducteurs longitudinaux électriques (16b) du second composant longitudinal conducteur (16) ; et
-- un second composant de connexion transversale qui relie le ou les seconds conducteurs longitudinaux électriques (14b) du premier composant longitudinal conducteur (14) au ou aux seconds conducteurs longitudinaux électriques (16b) du second composant longitudinal conducteur (16) de manière électriquement conductrice en une pluralité de positions le long de l'étendue longitudinale du module d'émission de telle sorte que le courant électrique s'écoulant dans le second conducteur longitudinal électrique (14b, 16b) ou les seconds conducteurs longitudinaux électriques (14b, 16b) des premier et second composants longitudinaux conducteurs (14, 16) en raison du premier signal de courant décroît de manière monotone de la seconde section d'extrémité (20) à la première section d'extrémité (18).

**4.** Dispositif selon la revendication 3, dans lequel le premier composant de réseau électrique (10a) comprend une première bobine conductrice avec une pluralité de premières spires conductrices qui sont formées chacune par un premier conducteur longitudinal électrique (14a) du premier composant longitudinal conducteur (14), un premier conducteur longitudinal électrique (16a) du second composant longitudinal conducteur (16), un conducteur de connexion (24a) reliant les premier et second composants longitudinaux conducteurs (14, 16) au niveau de la première section d'extrémité (18), et un premier conducteur transversal (22a) compris par le premier composant de connexion transversale, dans lequel les premiers conducteurs transversaux (22a) compris par le premier composant de connexion transversale de la pluralité de premières spires conductrices sont disposés au moins partiellement en différentes positions (p) le long de l'étendue longitudinale (x), et
dans lequel le second composant de réseau électrique (10b) comprend une seconde bobine conductrice avec une pluralité de secondes spires conductrices qui sont formées chacune par un second conducteur longitudinal électrique (14b) du premier composant longitudinal conducteur (14), un second conducteur longitudinal électrique (16b) du second composant longitudinal conducteur (16), un conducteur de connexion (24b) reliant les premier et second composants longitudinaux conducteurs (14, 16) au niveau de la seconde section d'extrémité (20), et un second conducteur transversal (22b) compris par le second composant de connexion transversale, dans lequel les seconds conducteurs transversaux (22b) compris par le second composant de connexion transversale de la pluralité de secondes spires conductrices sont disposés au moins partiellement en différentes positions (p) le long de l'étendue longitudinale (x).

**5.** Dispositif de détermination de position comprenant :

- au moins un élément d'émission (12) qui est conçu pour générer un champ magnétique périodique,
- au moins un réseau électrique (10) pouvant être déplacé par rapport à l'élément d'émission (12) avec au moins un premier et un second composant longitudinal conducteur (14, 16) qui s'étendent le long d'une étendue longitudinale (x) du réseau électrique (10) parallèlement l'un à l'autre d'une première section d'extrémité (18) du réseau électrique (10) à une seconde section d'extrémité (20) du réseau électrique (10), dans lequel le réseau électrique (10) comprend :

-- un premier composant de réseau électrique (10a) qui comprend une première bobine conductrice avec une pluralité de premières spires conductrices qui sont formées chacune par un premier conducteur longitudinal électrique (14a) du premier composant longitudinal conducteur (14), un premier conducteur longitudinal électrique (16a) du second composant longitudinal conducteur (16), un conducteur de connexion (24a) reliant les premier et second composants longitudinaux conducteurs (14, 16) au niveau de la première section d'extrémité (18), et un premier conducteur transversal (22a) disposé entre la première section d'extrémité (18) et la seconde section d'extrémité (20), dans lequel les premiers conducteurs transversaux (22a) de la pluralité de premières spires conductrices sont disposés au moins partiellement en différentes positions (p) le long de l'étendue longitudinale (x), et

-- un second composant de réseau électrique (10b) qui comprend une seconde bobine conductrice avec une pluralité de secondes spires conductrices qui sont formées chacune par un second conducteur longitudinal électrique (14b) du premier composant longitudinal conducteur (14), un second conducteur longitudinal électrique (16b) du second composant longitudinal conducteur (16), un conducteur de connexion (24b) reliant les premier et second composants longitudinaux conducteurs (14, 16) au niveau de la seconde section d'extrémité (20), et un second conducteur transversal (22b) disposé entre la première section d'extrémité (18) et la seconde section d'extrémité (20), dans lequel les seconds conducteurs transversaux (22b) de la pluralité de secondes spires conductrices sont disposés au moins partiellement en différentes positions (p) le long de l'étendue longitudinale (x) ; et

- un dispositif de capteur qui est conçu pour détecter un premier signal électrique induit par le champ magnétique périodique dans la première bobine conductrice et un second signal électrique induit par le champ magnétique périodique dans la seconde bobine conductrice.

6. Dispositif selon la revendication 5, dans lequel le dispositif de capteur comprend un décaleur de phase (28) qui est conçu pour décaler la phase du second signal détecté d'un décalage de phases déterminé ($\alpha_2$), et dans lequel le dispositif de capteur est conçu pour ajouter le premier signal détecté et le second signal décalé au niveau de la phase à un signal de capteur global et déterminer un décalage de phases du signal de capteur global par rapport à la phase du champ magnétique périodique.

7. Dispositif selon l'une quelconque des revendications précédentes, dans lequel la connexion transversale électrique, notamment le premier et/ou second composant de connexion transversale électrique, présente une pluralité de conducteurs transversaux électriques (22 ; 22a, 22b) qui comprennent chacun une résistance électrique (R), dans lequel les conducteurs transversaux électriques (22 ; 22a, 22b) relient les premier et second composants longitudinaux conducteurs (14, 16) ensemble, notamment un conducteur longitudinal électrique (14', 16' ; 14a, 14b, 16a, 16b) compris à chaque fois parmi eux, en des positions au moins partiellement différentes (p) le long de l'étendue longitudinale (x) par le biais de la résistance électrique respective (R).

8. Dispositif selon l'une quelconque des revendications précédentes, dans lequel la connexion transversale électrique, notamment le premier et/ou second composant de connexion transversale électrique, comprend une couche électriquement conductrice (26) qui relie en continu les premier et second composants longitudinaux conducteurs (14, 16) ensemble, notamment un conducteur longitudinal électrique (14', 16') compris à chaque fois parmi eux, en une pluralité de positions (p) le long de l'étendue longitudinale (x).

9. Dispositif selon la revendication 8, dans lequel la résistance électrique (R) de la couche conductrice (26) est au moins aussi grande, de préférence au moins 5 fois aussi grande, de manière encore plus préférée au moins 10 fois aussi grande, de manière davantage préférée au moins 50 fois aussi grande, de manière particulièrement préférée au moins 500 fois aussi grande, de manière préférée entre toutes au moins 1000 fois aussi grande que la résistance électrique du premier et/ou second composant longitudinal conducteur (14, 16).

10. Dispositif selon l'une quelconque des revendications précédentes, dans lequel la fréquence des premier et second signaux de courant ou du signal de courant se situe dans une plage d'environ 50 Hz à environ 5 MHz, de préférence dans une plage d'environ 500 Hz à environ 500 kHz, de manière encore plus préférée dans une plage d'environ 5 kHz à environ 100 kHz, de manière préférée entre toutes dans une plage d'environ 10 kHz à environ 50 kHz.

11. Dispositif selon l'une quelconque des revendications précédentes, dans lequel un nombre dans la plage d'environ 10 à environ 500, de préférence dans la plage d'environ 20 à environ 200 est prévu comme pluralité de positions (p) le long de l'étendue longitudinale (x).

12. Dispositif selon l'une quelconque des revendications précédentes, dans lequel un écart de positions voisines (p) de la pluralité de positions le long de l'étendue longitudinale (x) se situe dans la plage d'environ 1/10 à environ 10 fois, de préférence dans une plage d'environ 1/5 à environ 5 fois, de manière préférée entre toutes dans une plage d'environ ½ à environ 2 fois l'écart entre les premier et second composants longitudinaux conducteurs.

13. Procédé de détermination de position comprenant les étapes :

- mise à disposition d'un premier signal de courant périodique avec une première phase à une première section d'extrémité (18) d'un premier et d'un second composant longitudinal conducteur (14, 16) qui s'étendent le long d'une course de mesure (x) de la première section d'extrémité (18) à une seconde section d'extrémité (20) des composants longitudinaux conducteurs (14, 16) ;
- mise à disposition d'un second signal de courant périodique avec une seconde phase décalée d'un décalage de phases déterminé ($\alpha_2$) par rapport à la première phase au niveau de la seconde section d'extrémité (20) du premier et du second composant longitudinal conducteur (14, 16) ;
- connexion électrique des premier et second composants longitudinaux conducteurs (14, 16) en une pluralité de positions (p) le long de la course de mesure (x) de telle sorte qu'un courant électrique s'écoulant dans les premier et second composants longitudinaux conducteurs (14, 16) en raison du premier signal de courant décroît de manière monotone de la première section d'extrémité (18) à la seconde section d'extrémité (20) tandis qu'un courant électrique s'écoulant dans les premier et second composants longitudinaux conducteurs (14, 16) en raison du second signal de courant décroît de manière monotone de la seconde section d'extrémité (20) à la première section d'extrémité (18) ;
- détection d'un champ magnétique généré par l'écoulement de courant électrique dans les premier et second composants longitudinaux conducteurs (14, 16) au moyen d'un élément de capteur (12) pouvant être déplacé par rapport aux composants longitudinaux conducteurs ;
- détermination d'un décalage de phases du champ magnétique détecté par rapport au premier et/ou second signal de courant ; et
- détermination d'une position de l'élément de capteur (12) par rapport aux composants longitudinaux conducteurs (14, 16) à partir du décalage de phases déterminé du champ magnétique détecté par rapport au premier et/ou second signal de courant.

14. Procédé de détermination de position comprenant les étapes :

- génération d'un champ magnétique périodique au moyen d'un élément d'émission (12) qui peut être déplacé par rapport à un réseau électrique (10) avec au moins un premier et un second composant longitudinal conducteur (14, 16) qui s'étendent le long d'une étendue longitudinale (x) du réseau électrique (10) parallèlement l'un à l'autre d'une première section d'extrémité (18) du réseau électrique (10) à une seconde section d'extrémité (20) du réseau électrique (10) ;
- détection d'un premier signal électrique induit par le champ magnétique périodique dans une première bobine conductrice avec une pluralité de premières spires conductrices qui sont formées chacune par un premier conducteur longitudinal électrique (14a) du premier composant longitudinal conducteur (14), un premier conducteur longitudinal électrique (16a) du second composant longitudinal conducteur (16), un conducteur de connexion (24a) reliant les premier et second composants longitudinaux conducteurs (14, 16) au niveau de la première section d'extrémité (18), et un premier conducteur transversal (22a) disposé entre la première section d'extrémité (18) et la seconde section d'extrémité (20), dans lequel les premiers conducteurs transversaux (22a) de la pluralité de premières spires conductrices sont disposés au moins partiellement en différentes positions (p) le long de l'étendue longitudinale (x), et
- détection d'un second signal électrique induit par le champ magnétique périodique dans une seconde bobine conductrice avec une pluralité de secondes spires conductrices qui sont formées chacune par un second conducteur longitudinal électrique (14b) du premier composant longitudinal conducteur (14), un second conducteur longitudinal électrique (16b) du second composant longitudinal conducteur (16), un conducteur de connexion (24b) reliant les premier et second composants longitudinaux conducteurs (14, 16) au niveau de la seconde section d'extrémité (20), et un second conducteur transversal (22b) disposé entre la première section d'extrémité (18) et la seconde section d'extrémité (20), dans lequel les seconds conducteurs transversaux (22b) de la pluralité de secondes spires conductrices sont disposés au moins partiellement en différentes positions (p) le long de l'étendue longitudinale (x),
- détermination d'une position de l'élément d'émission (12) par rapport au réseau électrique (10) à partir des signaux électriques détectés.

15. Procédé selon la revendication 14, comprenant en outre

- décalage de la phase du second signal électrique détecté d'un décalage de phases déterminé ($\alpha_2$) ; et
- détermination d'un signal combiné à partir du premier signal électrique détecté et du second signal électrique décalé au niveau de la phase,

dans lequel la détermination de la position de l'élément d'émission (12) par rapport au réseau électrique (10) comprend une détermination d'une relation des phases du signal combiné par rapport au champ magnétique périodique.

Fig. 1

Fig. 2

Fig. 3

Fig. 4

Fig. 5

Fig. 6

## Fig. 7

## Fig. 8

Fig. 9

| p=0 | p=1 | p=2 | p=3 | p=4 | p=5 | p=6 | p$_{max}$=6 |
|-----|-----|-----|-----|-----|-----|-----|------|

10

$6*I1$ $+$ $0*I2$    $5*I1$ $+$ $1*I2$    $4*I1$ $+$ $2*I2$    $3*I1$ $+$ $3*I2$    $2*I1$ $+$ $4*I2$    $1*I1$ $+$ $5*I2$    $0*I1$ $+$ $6*I2$

$I_{e1}$    R   R   H   14' 16'   R   S   22   R    $I_{e2}$

$\Delta x$

$x = p \cdot \Delta x$

Fig. 10

18    14    14'    26    20

$I_{e1}$          S          $I_{e2}$

16    16'    12

## Fig. 11A

hmax

NX

Ui

12

h4

h3

h2

h1

10

x

## Fig. 11B

10

y

Ui

12

NY

v1  v2  v3  v4                    vmax

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050030010 A1

- WO 2007107353 A1